# EUROPEAN PATENT APPLICATION

(11) **EP 4 851 031 A1**
(43) Date of publication of application: **09.12.2026**
(21) Application number: 26183386.7
(22) Date of filing: 05.06.2026
(51) Int. Cl.: B62L 3/02

(54) **BRAKING SYSTEM IN BRAKE-BY-WIRE TECHNOLOGY FOR STRADDLE-TYPE VEHICLES**

(30) Priority: 06.06.2025 IT 202500013192
(71) Applicant: BREMBO N.V., 24126 Bergamo (IT)
(72) Inventor: MAZZOLENI, Samuele, I-24126 BERGAMO (IT); BALDUCCI, Lorenzo, I-24126 BERGAMO (IT); SETTONI, Davide, I-24126 BERGAMO (IT); ISGRO', Davide, I-24126 BERGAMO (IT); TRUFFELLO, Martina, I-24126 BERGAMO (IT)
(74) Representative: Mozzi, Matteo

(57) **Abstract**

A braking system (100) in Brake-by-Wire technology for straddle-type vehicles, comprising: at least one first front brake (F1) operatively associable with a first front wheel of a straddle-type vehicle; a first actuator (A1) of electro-hydraulic type operationally connected to said at least one first front brake (F1); at least one second brake (F2) operatively associable with a second rear wheel of the straddle-type vehicle; a second actuator (A2) of electro-hydraulic type operatively connected to said at least one second rear brake (F2); a lever (L-V) of hydraulic type, located on the handlebars of the straddle-type vehicle, adapted to send, at the command of a driver of the straddle-type vehicle, a respective braking request to the first actuator (A1) of electro-hydraulic type to impart a respective braking action to the first front wheel of the straddle-type vehicle by means of said at least one first front brake (F1) and/or a respective braking action to the second rear wheel of the straddle-type vehicle by means of at least one second rear brake (F2); a pedal group (E-P) of electrical type adapted to send, at the command of the driver of the straddle-type vehicle, a respective braking request to the second actuator (A2) of electro-hydraulic type to impart a respective braking action to the second rear wheel by means of said at least one second rear brake (F2) and/or a respective braking action to the first front wheel of the straddle-type vehicle by means of said at least one first front brake (F1); at least one electronic braking control unit (UC) operatively connected to said lever (L-V) of hydraulic type and electrically connected to said first actuator (A1) of electro-hydraulic type, to said second actuator (A2) of electro-hydraulic type and to said pedal group (E-P) of electrical type. The at least one electronic braking control unit (UC) is configured to control the braking of the first front wheel of said straddle-type vehicle and the braking of the second rear wheel of said straddle-type vehicle based on the braking request received from the driver of said straddle-type vehicle by means of said lever (L-V) of hydraulic type and the braking request received from the driver of said straddle-type vehicle by means of said pedal group (E-P) of electrical type.

## Description

### . Field of the invention

**.** The present invention relates to braking systems for vehicles, in particular to a braking system in Brake-by-Wire technology for straddle-type vehicles.

### . Background art

**.** Currently, integral braking systems are known, which are classified into hydraulic braking systems and electro-hydraulic or electro-mechanical braking systems.

**.** Among the former are hydraulic braking systems with a two-line hydraulic circuit, in which the actuation applied by the driver to the control lever/pedal is transferred to the front/rear wheel by means of one of the two hydraulic lines, respectively, and converted into a braking force on the individual wheel.

**.** In this case, it is the driver who must self-modulate the pressure to be imparted to the actuator so as to limit the braking distance, accumulate braking pressure at the wheels as quickly as possible, and yet avoid wheel lock-up, so as to ensure a certain stability to the vehicle.

**.** As a result, this configuration is limited in stability and comfort.

**.** To achieve a better braking force distribution between the front wheel and the rear wheel, integral hydraulic braking systems or CBS (Combined Braking Systems) exist, which may be single CBS or dual CBS, depending on whether the actuator control acts only on the rear wheel or on both wheels.

**.** In these systems, in which there is no ABS control, a fixed preset braking force distribution is applied, with evident limitations in safety and driving comfort.

**.** Instead, further hydraulic ABS braking systems exist which actively modulate pressure, reducing it under certain conditions so as to release the wheels and accelerate again in the event of a risk of lock-up, with the ultimate aim of always maintaining a certain stability.

**.** Nowadays, in light of the above, a need is strongly felt to have available a braking system in B-b-W technology for motorcycles, or more generally straddle-type vehicles, which is as simple as possible in terms of configuration, but at the same time reliable, high-performing, and such as to ensure an adequate level of safety for the braking system, and thus for the straddle-type vehicle.

### . Summary of the invention

**.** It is the object of the present invention to devise and make available a braking system in B-b-W technology for straddle-type vehicles which makes it possible to at least partially overcome the drawbacks set out above with reference to the prior art and, in particular, which is as simple as possible in terms of configuration, but at the same time reliable, high-performing, and such as to ensure an adequate level of safety for the braking system, and thus for the straddle-type vehicle.

**.** This object is achieved by a braking system according to claim 1.

**.** Further advantageous embodiments of the braking system are the subject of the respective dependent claims.

**.** It is a further object of the present invention, a straddle-type vehicle comprising the braking system.

### . Brief description of the figures

**.** Further features and advantages of the braking system according to the invention will become apparent from the following description of preferred exemplary embodiments, given by way of non-limiting indication, with reference to the accompanying drawings, in which:
- figure 1 diagrammatically shows a straddle-type vehicle to which the braking system in B-b-W technology according to the present invention;
- figure 2 shows, by means of a block diagram, the braking system in B-b-W technology for straddle-type vehicles according to the present invention;
- figure 3 shows a perspective view of a component of the braking system in B-b-W technology for straddle-type vehicles according to an embodiment of the present invention;
- figure 4 shows a cross-section view of the component in figure 3;
- figure 5 shows a side section view of the component in figure 3;
- figure 6 shows an exploded view of the component in figure 3;
- figure 7 shows a side section view of a component of the braking system in B-b-W technology for straddle-type vehicles according to a further embodiment of the present invention;
- figure 8 shows a perspective view of a component of the braking system in B-b-W technology for straddle-type vehicles according to a further embodiment of the present invention;
- figure 9 shows a side section view of the component in figure 8;
- figure 10 shows an exploded view of a component of the braking system in B-b-W technology for straddle-type vehicles according to a further embodiment of the present invention;
- figure 11 shows a cross-section view of the component in figure 10;
- figure 12 shows a perspective view of a further component of the component of figure 10;
- figure 13 shows, by means of a block diagram, a brake control architecture of the braking system in B-b-W technology for straddle-type vehicles according to a further embodiment of the present invention;
- figure 14 shows, by means of a block diagram, a brake control architecture of the braking system in B-b-W technology for straddle-type vehicles according to a further embodiment of the present invention;
- figure 15 shows, by means of a block diagram, a braking system in B-b-W technology for straddle-type vehicles comprising a brake control architecture according to a further embodiment of the present invention;
- figure 16 shows, by means of a block diagram, a braking system in B-b-W technology for straddle-type vehicles comprising a brake control architecture according to a further embodiment of the present invention, and
- figure 17 shows, by means of graphs, a time profile of a switching of a brake pedal for straddle-type vehicles and a time profile of a deceleration of a straddle-type vehicle controlled by a brake control system architecture employable in the braking system in B-b-W technology in figures 15 and 16;
- figure 18 shows a hydraulic scheme relating to a control sub-group of the brake system in B-b-W technology for straddle-type vehicles according to an embodiment of the present invention, and
- figure 19 shows a hydraulic scheme relating to a control sub-group of the brake system in B-b-W technology for straddle-type vehicles according to a further embodiment of the present invention.

It is worth noting that equal or similar elements in the drawings will be indicated by the same numeric or alphanumeric references.

### . Description of some preferred embodiments

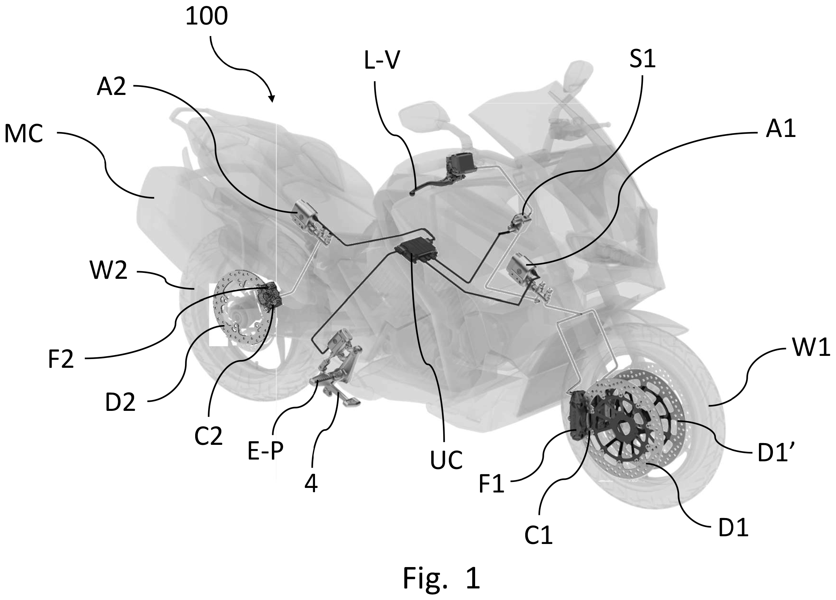

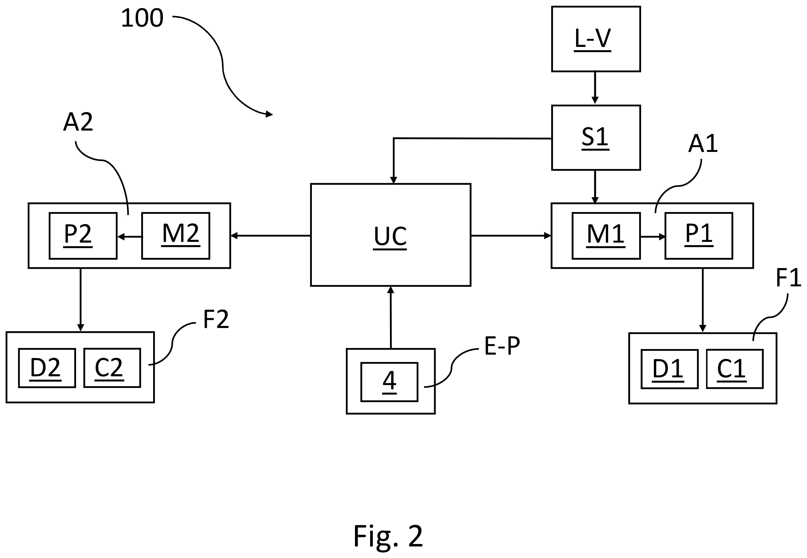

**.** With reference to figures 1 and 2, reference numeral 100 indicates, as a whole, a braking system in B-b-W technology for straddle-type vehicles, hereinafter also simply braking system or just system, according to the present invention.

**.** "Braking system" of a straddle-type vehicle means a whole of all the components (from the mechanical and/or electrical or electronic ones to the brake fluid) which contribute to generating the service braking of the straddle-type vehicle.

**.** "Straddle-type vehicle" means a type of transport means which is distinguished by the presence of a straddle as the primary support element for the driver and, possibly, for a passenger. The straddle allows the drider to straddle the vehicle, keeping the legs spread apart on both sides, offering in this manner a lower center of gravity and greater interaction with the vehicle itself.

**.** Straddle-type vehicles may be two-wheeled (such as motorcycles, motorbikes, mopeds, scooters), three-wheeled (such as some types of motorized tricycles or three-wheeled scooters) and also, albeit more rarely, four-wheeled (such as some types of quads, although the classification may overlap with straddle-type vehicles by virtue of specific models).

**.** Straddle-type vehicles, e.g., with two wheels, also comprise bicycles, both non-motorized and motorized, e.g., with pedal assistance.

**.** According to the present invention, the braking system 100 comprises at least one first front brake F1 operatively associable to a first front wheel W1 of a straddle-type vehicle MC, e.g., a motorcycle, diagrammatically shown in figure 1.

**.** In greater detail, the at least one first front brake F1 comprises at least one first brake disc D1 mountable on the first front wheel W1 of the straddle-type vehicle MC and at least one first brake caliper C1 on which at least one brake pad is mounted, adapted to act on the at least one first brake disc D1 under the action of the at least one first brake caliper C1 so as to apply a clamping force (braking torque) on the at least one first brake disc D1, thus on the first front wheel W1 of the straddle-type vehicle MC.

**.** According to the example of figure 1, the at least one first front brake F1 may comprise a respective further brake disc D1', also mountable on the first wheel W1 of the straddle-type vehicle MC, and a respective further brake caliper (not visible in the figure) on which a respective brake pad is mounted, adapted to act on the further brake disc D1' of the at least one first front brake F1 under the action of the respective further brake caliper so as to apply a respective clamping force (braking torque) also on the further brake disc D1' of the at least one first front brake F1, thus on the first front wheel W1 of the straddle-type vehicle MC.

**.** It is worth noting that, alternatively to the at least one first brake caliper C1 and the further brake caliper, the at least one first front brake F1 may comprise only the at least one first brake caliper C1 adapted to act, by means of the brake pads mounted thereon, both on the at least one first brake disc D1 and on the further brake disc D1'.

**.** According to the present invention, the braking system 100 further comprises a first actuator A1 of electro-hydraulic type operatively connected to said at least one first front brake F1.

**.** The braking system 100 further comprises at least one second rear brake F2 operatively associable with a second rear wheel W2 (shown in figure 1) of the straddle-type vehicle MC.

**.** In greater detail, the at least one second rear brake F2 comprises at least one second brake disc D2 mountable on the second rear wheel W2 of the straddle-type vehicle MC and at least one second brake caliper C2 on which at least one second brake pad adapted to act on the second brake disc D2 under the action of the at least one second brake caliper C2 is mounted to so as to apply a clamping force (braking torque) on the second brake disc D2, thus on the second rear wheel W2 of the straddle-type vehicle MC.

**.** According to an example, not shown in figure 1, the at least one second brake F2 may comprise a respective further brake disc, also mountable on the second rear wheel W2 of the straddle-type vehicle MC, and a respective further brake caliper on which a respective brake pad is mounted adapted to act on the further brake disc of the at least one second brake F2 under the action of the respective further brake caliper so as to apply a respective clamping force (braking torque) also on the further brake disc of the at least one second brake F2, and thus on the second rear wheel W2 of the straddle-type vehicle MC.

**.** It is worth noting that, alternatively to the at least one second brake caliper C2 and the further brake caliper, the at least one second brake F2 may comprise only the at least one second brake caliper C2 adapted to act, by means of the brake pads mounted thereon, both on the at least one second brake disc D2 and on the further brake disc.

**.** The braking system 100 further comprises a lever L-V of hydraulic type, arranged on the handlebar of the straddle-type vehicle MC, adapted to send, upon command by a driver of the motorcycle MC, a respective braking request to impart a respective braking to the first front wheel W1 of the straddle-type vehicle MC by means of said at least one first front brake F1 and/or a respective braking to the second rear wheel W2 of the straddle-type vehicle MC by means of said at least one second rear brake F2.

**.** According to the present invention, the braking system 100 further comprises a pedal group E-P of electrical type adapted to send, upon command of the driver of the straddle-type vehicle MC, a respective braking request to impart a respective braking to the second rear wheel W2 by means of said at least one second rear brake F2 and/or a respective braking to the first front wheel W1 of the straddle-type vehicle MC by means of said at least one first front brake F1.

**.** The braking system 100 further comprises at least one electronic braking control unit UC operatively connected to said lever L-V of hydraulic type and electrically connected to said first actuator A1 of electro-hydraulic type, to said second actuator A2 of electro-hydraulic type and to said pedal group E-P of electrical type.

**.** The at least one electronic braking control unit UC is configured to control the braking of the first front wheel W1 of the straddle-type vehicle MC and the braking of the second rear wheel W2 of the straddle-type vehicle MC based on the braking request received from the driver of the straddle-type vehicle MC by means of the lever L-V of hydraulic type, and of the braking request received from the driver of the motorcycle MC by means of the pedal group E-P of electrical type.

**.** The at least one electronic braking control unit UC is, for example, a specifically configured hardware module, or software logic present inside a main hardware module of the braking system 100 of the straddle-type vehicle MC, or, more generally, in a hardware module of the straddle-type vehicle MC.

**.** Therefore, with regard to the commands provided in the braking system 100, the command on the first front wheel W1 of the straddle-type vehicle MC is of hydraulic type (front WET command) (lever L-V of hydraulic type which sends a physical signal - displacement of fluid), while the command on the second rear wheel W2 of the straddle-type vehicle MC is of the electrical type (rear DRY command) (pedal group E-P of electrical type which sends a signal of electrical type).

**.** Instead, as regards the actuations provided in the braking system 100, both the first actuator A1 and the second actuator A2 are of electro-hydraulic type and thus adapted to supply an actuation signal of hydraulic type, respectively, to the at least one first front brake F1 and to the at least one second rear brake F2.

**.** Therefore, the actuation on the first front wheel W1 of the straddle-type vehicle MC is of hydraulic type (front WET actuation) and the actuation on the second rear wheel W2 of the straddle-type vehicle MC is of hydraulic type (rear WET actuation).

**.** Consequently, the braking system 100 in B-b-W technology of the present invention represents an architecture of the "WET-DRY - WET-WET" type, considering the following legend "front command/rear command - front actuation/rear actuation".

**.** According to an embodiment, diagrammatically shown in figures 1 and 2, the braking system 100 further comprises a control sub-group S1 operatively associated with the lever L-V of hydraulic type and electrically connected to the at least one electronic braking control unit UC and the first electro-hydraulic electrical actuator A1.

**.** When the braking system 100 is in a B-b-W operating mode (B-b-W ON), the control sub-group S1 is configured to electrically detect (e.g., by means of a pressure sensor, possibly also by means of a position sensor or a force sensor) a physical signal (fluid displacement) representative of the actuation of the lever L-V of hydraulic type by the driver of the straddle-type vehicle MC and to provide a corresponding electrical actuation signal of the lever L-V of hydraulic type to the at least one electronic braking control unit UC.

**.** In this operating mode of the braking system 100, the at least one electronic braking control unit UC is configured to provide the first actuator A1 of electro-hydraulic type with a respective electrical actuation signal based on the electrical control signal of the lever L-V of hydraulic type received from the control sub-group S1.

**.** When the braking system 100 is in a hydraulic backup operating mode (B-b-W OFF), the control sub-group S1 is configured to send directly to the first actuator A1 of electro-hydraulic type a physical signal (fluid displacement) representative of the actuation of the lever L-V of hydraulic type by the driver of the straddle-type vehicle MC.

**.** In this operating mode of the braking system 100, the first actuator A1 of electro-hydraulic type is configured to consider the physical signal representative of the actuation of the lever L-V of hydraulic type by the drider of the straddle-type vehicle MC as a respective actuation signal of hydraulic type.

**.** According to an embodiment, the control sub-group S1 comprises a braking feeling or request simulation block 40 with lever of hydraulic type (or absorber block) and a separation valve 41 of a braking feeling or request simulation circuit with lever of hydraulic type and a brake actuation circuit with lever of hydraulic type present in the braking system 100 and a discharge check valve 42 arranged in parallel to said separation valve 41.

**.** The transition from the B-b-W operating mode of the braking system 100 to the hydraulic backup mode is achieved by actuating the separation valve 41 present in the control sub-group S1 by the at least one electronic braking control unit UC.

**.** In this embodiment, the brake system 100 comprises a first hydraulic line H1 configured to connect a master cylinder associated with said lever L-V of hydraulic type to said braking feeling or request simulation block 40 with lever of hydraulic type, and upstream of said separation valve 41 and said discharge check valve 42 of said control sub-group S1.

**.** When the brake system 100 is in an active B-b-W operating mode:
**.** said separation valve 41 is configured, upon command of the at least one electronic brake control unit UC, to close in order to prevent the passage of brake fluid from the master cylinder to the at least one brake caliper C1 whose internal pressure is generated by the first electro-hydraulic electric actuator A1; in this way, the direct hydraulic line leading from the master cylinder to the at least one brake caliper C1 is interrupted;
**.** in the event of actuation of the lever L-V of hydraulic-type, the brake fluid flows towards the braking feeling or request simulation block 40 with lever of hydraulic type and the pressure of the brake fluid pushes the discharge check valve 42 into a closed position;
**.** in the event of release of the lever L-V of hydraulic-type, the braking feeling or request simulation block 40 with lever of hydraulic type pushes the brake fluid towards the master cylinder;
**.** in the event that the brake fluid pressure generated by the first electro-hydraulic electric actuator A1 is greater than the brake fluid pressure present in the first hydraulic line H1, the discharge check valve 42 is configured to open to allow the discharge of brake fluid towards the master cylinder; this advantageously allows the discharge of any extra-pressure of the hydraulic fluid that may be generated in the at least one brake caliper C1, for example due to thermal phenomena.

**.** In this embodiment, when the brake system 100 is in hydraulic backup mode:
**.** the separation valve 41 is configured to open to allow a direct hydraulic connection of the lever L-V of hydraulic-type with the at least one brake caliper C1;
**.** the brake fluid pressure in the first hydraulic line H1 is equal to the brake fluid pressure generated by the first electro-hydraulic electric actuator A1, consequently, the discharge check valve 42 is closed;
**.** in the event of actuation of the hydraulic-type lever L-V, the brake fluid flows towards the first electro-hydraulic electric actuator A1 and the at least one brake caliper C1.

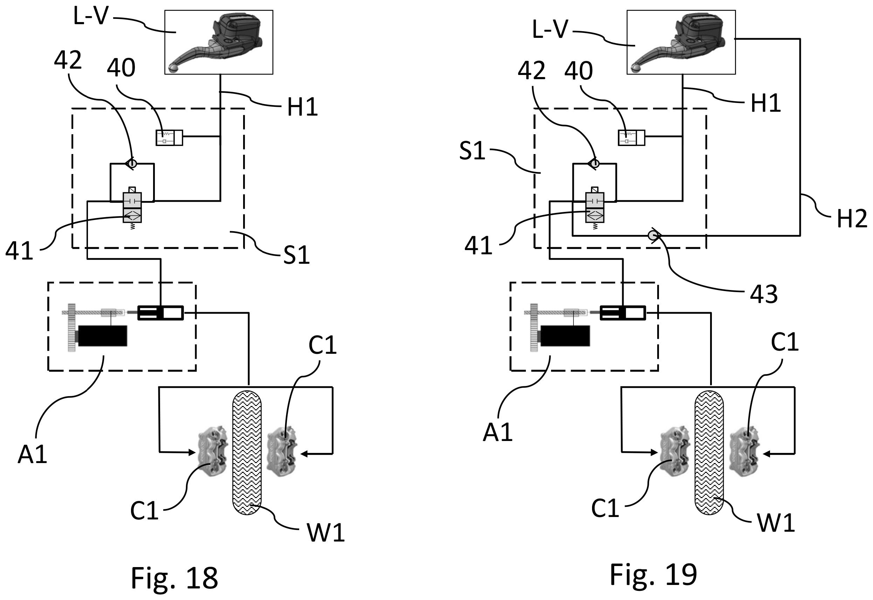

**.** According to an embodiment, in combination with the previous one and shown in figure 19, the brake system 100 comprises a second hydraulic line H2 configured to connect the master cylinder associated with said lever L-V of hydraulic-type downstream of said separation valve 41 and of said discharge check valve 42 of said control sub-group S1, and to said at least one brake caliper C1 via said first electro-hydraulic actuator A1. The second hydraulic line H2 comprises a refill check valve 43.

**.** In this embodiment, when the brake system 100 is in an active B-b-W operating mode, the refill check valve 43 on the second hydraulic line H2 remains closed because the pressure in the branch of the at least one brake caliper C1 is higher than the ambient pressure of the master cylinder.

**.** In this embodiment, in the absence of a brake request by the driver of the straddle-type vehicle MC, the refill check valve 43 on the second hydraulic line H2 can open in the event that the brake fluid pressure generated by the first electro-hydraulic actuator A1 in the at least one brake caliper C1 is lower than the ambient pressure. This advantageously allows the brake fluid to flow down from the master cylinder towards the at least one brake caliper C1, in the event of brake pad wear.

**.** According to an embodiment, in combination with any of the preceding ones, the electrical pedal group E-P is configured to send to the at least one electronic braking control unit UC an electrical control signal representative of the braking request, in response to the command received from the drider of the straddle-type vehicle MC.

**.** In this embodiment, the at least one electronic braking control unit UC is configured to send to the second actuation device A2 of electro-hydraulic type an electrical actuation signal based on the electrical command signal received from the pedal group E-P of electrical type.

**.** The second actuator A2 of electro-hydraulic type is configured to generate a hydraulic signal (fluid displacement) representative of the braking request following the command received from the driver of the straddle-type vehicle MC, based on the received electrical actuation signal.

**.** According to an embodiment, in combination with any of the preceding ones, diagrammatically shown in figure 2, the first actuator A1 of electro-hydraulic type comprises a first electrical actuation device M1, e.g., a first electrical motor, electrically connected to the at least one electronic braking control unit UC.

**.** In this embodiment, the first actuator A1 of electro-hydraulic type further comprises a first hydraulic actuation device P1, e.g., a first piston housed inside a respective first housing, inserted inside the hydraulic circuit of the braking system 100 and adapted to be moved, by means of a first gear motor group (not shown in figure 2), by the first electrical actuation device M1, to apply on the brake fluid a pressure such as to impart a respective braking to the first front wheel W1 of the straddle-type vehicle MC by means of said at least one first front brake F1.

**.** The first gear motor group comprises a first transmission and a first rotary-to-linear motion conversion mechanism (linear drive).

**.** According to an embodiment, in combination with any of the preceding ones in which it is provided that the first actuator A1 of electro-hydraulic type comprises the first electrical actuation device M1 and the first hydraulic actuation device P1, also diagrammatically shown in figure 2, the second actuator A2 of electro-hydraulic type comprises a second electrical actuation device M2, e.g., a second electrical motor, electrically connected to the at least one electronic braking control unit UC.

**.** In this embodiment, the second actuator A2 of electro-hydraulic type further comprises a second hydraulic actuation device P2, e.g., a second piston housed inside a respective first housing, inserted inside the hydraulic circuit of the braking system 100 and adapted to be moved, by means of a second gear motor group (not shown in figure 2), by the second electrical actuation device M2 to apply a pressure on the brake fluid such as to impart a respective braking to the second rear wheel W2 of the straddle-type vehicle MC by means of said at least one second rear brake F2.

**.** The second gear motor group comprises a second transmission and a second rotary-to-linear motion conversion mechanism (linear drive).

**.** In this embodiment, the at least one electronic control unit UC is configured to send a respective electrical actuation signal to the second electrical actuation M2.

**.** The movement of the second electrical actuation device M2, based on the respective electrical signal received from the at least one electronic braking control unit UC, causes the movement of the second hydraulic movement device P2, and thus the generation of a corresponding actuation signal of hydraulic type with which to consequently actuate the at least one second rear brake F2.

**.** According to an embodiment, in combination with any of the preceding ones, the at least one electronic braking control unit UC is configured to determine the brake force distribution and/or the brake force intensity to be imparted between the first front wheel W1 of the straddle-type vehicle MC and the second rear wheel W2 of the straddle-type vehicle MC, based on the braking request received from the lever L-V of hydraulic type and based on the braking request received from the pedal group E-P of electrical type.

**.** In this embodiment, the at least one electronic braking control unit UC is thus configured to implement a combined braking system CBS, in which the braking distribution from the lever of hydraulic type and/or from the pedal group of electrical type occurs between the first front wheel and the second rear wheel of the straddle-type vehicle, more generally between the front axle and the rear axle of the straddle-type vehicle.

**.** In an embodiment, in combination with any of the preceding ones, the at least one electronic braking control unit UC is configured to determine the braking force distribution and/or the braking force intensity to be imparted between the first front wheel W1 of the straddle-type vehicle MC and the second rear wheel W2 of the straddle-type vehicle MC based on an established control logic, based on environmental conditions in which the straddle-type vehicle MC is located and/or based on a braking operating mode selectable by the drider of the straddle-type vehicle MC or set automatically by a program code based on established control algorithms.

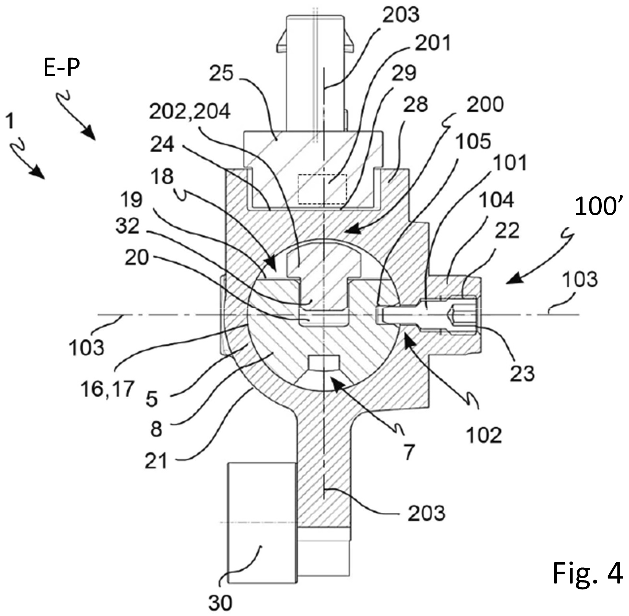

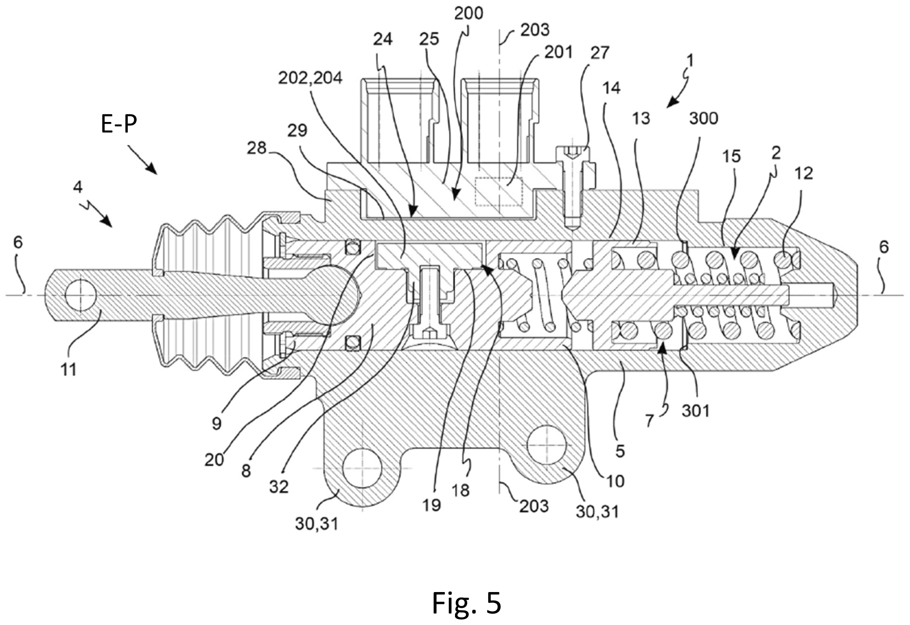

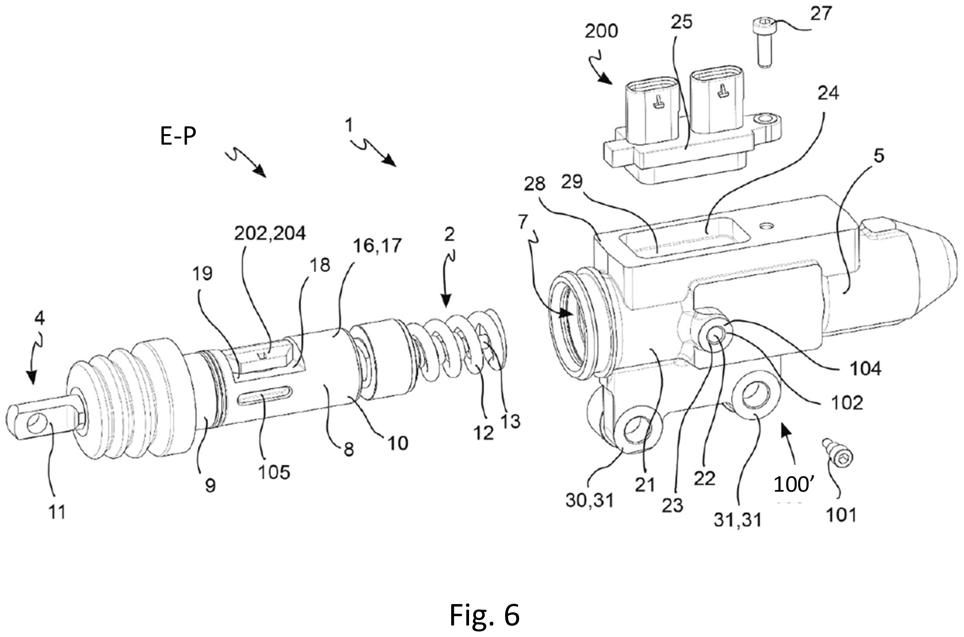

**.** According to an embodiment, in combination with any of the preceding ones, shown in figures 1, 3-6, the pedal group E-P of electrical type comprises a braking feeling or request simulator device 1.

**.** The braking feeling or request simulator device 1 comprises a cylinder body 5, extending along an axis of actuation 6.

**.** The cylinder body 5 forms a cylinder compartment 7 therein.

**.** Preferably, the cylinder body 5 is extended substantially coaxially with the axis of actuation 6.

**.** The braking feeling or request simulator device 1 further comprises a piston body 8.

**.** The piston body 8 is housed in a sliding manner in the cylinder compartment 7.

**.** Preferably, the piston body 8 is positioned substantially coaxial with the axis of actuation 6.

**.** The pedal group E-P of electrical type further comprises a brake pedal or lever 4, in particular of the braking system 100, connected to the braking feeling or request simulator device 1 so that an actuation of the brake pedal or lever 4 corresponds to a translation of the piston body 8 inside the cylinder body 5, along the axis of actuation 6.

**.** In an embodiment, shown in the figures, the pedal group E-P of electrical type comprises a brake pedal 4, which can be actuated by the driver of the straddle-type vehicle MC by means of a foot.

**.** In this embodiment, the pedal group E-P of electrical type can be installed on a frame portion of the straddle-type vehicle MC (e.g., low toward the rear part) so that it can be accessed with the foot by the drider of the straddle-type vehicle MC.

**.** In an embodiment, not shown in the figures, as an alternative to the preceding one, the pedal group E-P of electrical type comprises a brake lever 4, which can be actuated by the driver of the straddle-type vehicle MC by means of a hand.

**.** In this embodiment, the pedal group E-P of electrical type can be installed on a frame portion of the straddle-type vehicle MC (e.g., on the handlebar) so that the brake lever 4 can be accessed with the hand by the driver of the straddle-type vehicle MC.

**.** In greater detail, the pedal group EP could be installed together with the brake lever on the handlebar, or a part of the pedal group E-P could be installed on a frame portion of the straddle-type vehicle different from the handlebar, with only the brake lever arranged on the handlebar of the straddle-type vehicle.

**.** Specifically, the piston body 8 is adapted to be connectable to the brake pedal or lever 4, in particular of the pedal group E-P, so that to an actuation of the brake pedal or lever 4 corresponds a translation of the piston body 8 with respect to the cylinder body 5 along the axis of actuation 6.

**.** The braking feeling or request simulator device 1 further comprises an absorber assembly 2.

**.** The absorber assembly 2 is configured to apply a reaction force on the brake pedal or lever 4 connected to the braking feeling or request simulator device 1, in opposition to an actuation of the brake pedal or lever 4.

**.** In particular, the absorber assembly 2 is configured to apply a reaction force on the piston body 8, in opposition to a translation of the piston body 8, which can be actuated by the brake pedal or lever 4.

**.** The absorber assembly 2 performs the function of providing the actuation feeling of the brake command, e.g., it may modify the stiffness thereof, in particular the relationship between the stroke of the brake command (brake pedal) and the force required to actuate it.

**.** The braking feeling or request simulator device 1 further comprises an anti-rotation system 100', a sensor system 200, and an end wall 300.

**.** The anti-rotation system 100' comprises an anti-rotation pin 101 and a pin receiving seat 102.

**.** The pin receiving seat 102 extends along a axis of reception 103, and is shaped to receive the anti-rotation pin 101 in the direction of the axis of reception 103, to achieve a coupling with the anti-rotation pin 101, preferably a shape and/or threaded coupling.

**.** Consequently, the anti-rotation pin 101 received in the pin receiving seat 102 is connected to the pin receiving seat 102 by means of shape and/or threaded coupling.

**.** Furthermore, when the anti-rotation pin 101 is inserted in the pin receiving seat 102, the anti-rotation pin 101 also extends along the axis of reception 103, preferably the anti-rotation pin 101 is substantially coaxial with the axis of reception 103.

**.** The pin receiving seat 102 is formed by a first receiving seat 104 and a second receiving seat 105, which face each other along the axis of reception 103, in particular, overlapping along the axis of reception 103.

**.** The first receiving seat 104 is defined by the cylinder body 5, while the second receiving seat 105 is defined by the piston body 8.

**.** The sensor system 200 is configured to detect a translation and/or a relative position between the piston body 8 and the cylinder body 5.

**.** The sensor system 200 comprises a first sensor 201 and a detectable element 202.

**.** The first sensor 201 is configured to detect a translation and/or a position of the detectable element 202.

**.** The first sensor 201 is positioned at the cylinder body 5, while the detectable element 202 is positioned at the piston body 8.

**.** The first sensor 201 and the detectable element 202 can face each other, in a radial direction with respect to the axis of actuation 6, along a sensor axis 203.

**.** Specifically, the sensor axis 203 is defined by a direction transverse to the actuating axis 6, optionally radial to the actuating axis 6, along which, in the stroke of the piston body 8 inside the cylinder body 5, the detectable element 202 is positioned at a minimum distance from the first sensor 201.

**.** Furthermore, the cylinder body 5 is shaped so as to form the end wall 300.

**.** The end wall 300 extends in an overhanging direction from the cylinder body 5 in an inward direction toward the cylinder compartment 7.

**.** The end wall 300 faces the piston body 8 and is configured so as to define the end-of-stroke position of the piston body 8.

**.** The end wall 300 extends around the axis of actuation 6, preferably coaxial with the axis of actuation 6.

**.** The end wall 300 defines a stop surface 301.

**.** The stop surface 301 extends on a plane transverse to the axis of actuation 6.

**.** Furthermore, the sensor axis 203 extends positioned, with reference to the axis of actuation 6, at an angular distance from the axis of reception 103 comprised between 60° and 150°.

**.** Specifically, the sensor axis 203 and the axis of reception 103, projected onto a plane transverse to the axis of actuation 6, define an angle between 60° and 150°.

**.** Advantageously, a braking feeling or request simulator device 1 configured in this manner is adapted to be of the dry type, i.e. in which the piston body 8 and the absorber assembly 2 are not immersed in a bath of hydraulic fluid, and makes it possible to effectively limit the stroke of the piston body 8 in the cylinder body 5 along the axis of actuation 6 by means of the end wall 300 having a stop surface 301 overhanging into the cylinder compartment 7 and orthogonal to the axis of actuation 6.

**.** This braking feeling or request simulator device 1, configured in this manner, advantageously integrates a sensor system 200 for detecting the translation of the piston body 8 in the cylinder body 5, thus making it possible to process, by means of the at least one electronic braking control unit UC, a corresponding braking request by the drider of the straddle-type vehicle MC who actuates the brake pedal or lever 4.

**.** Furthermore, the braking feeling or request simulator device 1, configured in this manner, advantageously integrates an anti-rotation system 100', configured to prevent an undesired rotation of the piston body 8 with respect to the cylinder body 5 about the axis of actuation 6.

**.** Furthermore, as a further advantage, the end wall 300, the sensor system 200, and the anti-rotation system 100', positioned and configured in this manner, make it possible to have a braking feeling or request simulator device 1 which, at the same time, integrates an end-of-stroke function of the translation of the piston body 8 with respect to the cylinder body 5, an anti-rotation function of the piston body 8 with respect to the cylinder body 5, and a function of detecting the position or translation of the piston body 8 with respect to the cylinder body 5.

**.** Furthermore, as a further advantage, the sensor system 200 and the anti-rotation system 100', positioned and configured in this manner, make the braking feeling or request simulator device 1 adapted to be connected both to a pedal and to a lever of a braking system of a straddle-type vehicle, and further such as to be manufactured by means of easy and low-cost mechanical machining.

**.** In an embodiment, in combination with the preceding one, the braking feeling or request simulator device 1 is of the dry type.

**.** Therefore, the piston body 8 and the absorber assembly 2 are thus not immersed in brake fluid, with a consequent reduction in costs and construction complexity.

**.** According to an embodiment, the sensor axis 203 extends, positioned with reference to the axis of actuation 6, at an angular distance from the axis of reception 103 comprised between 80° and 120°.

**.** According to an embodiment, the sensor axis 203 is extended positioned, with reference to the axis of actuation 6, at an angular distance from the axis of reception 103 of substantially 90°.

**.** Advantageously, this configuration minimizes the overall footprint of the braking feeling or request simulator device 1, while at the same time allowing integration of the combination of end-of-stroke, anti-rotation and detection functions described above, and further reducing any protruding portions of the braking feeling or request simulator device 1 which could collide with parts of the body of the drider of the straddle-type vehicle MC, e.g., the foot.

**.** The piston body 8 extends between a proximal end 9 and a distal end 10.

**.** The brake pedal or lever 4 is connected to the piston body 8 at the proximal end 9.

**.** In an embodiment, the piston body 8 is connected to the brake pedal or lever 4 by means of a push rod 11.

**.** Preferably, the push rod 11 is directly connected to the piston body 8 by mechanical connection means, e.g., a mechanical joint.

**.** In an embodiment, the piston body 8 defines a fastening seat at the proximal end 9. According to an embodiment, the push rod 11 is inserted fastened in the fastening seat.

**.** In an embodiment, the piston body 8 comprises a retaining ring housed in the fastening seat to ensure the connection of the push rod 11 to the piston body 8.

**.** According to an embodiment, in combination with any of the preceding ones in which the braking feeling or request simulator device 1 is provided, the absorber assembly 2 is configured to apply a reaction force on the piston body 8 in opposition to a translation of the piston body 8 in the cylinder body 5, which can be actuated by the brake pedal or lever 4.

**.** The absorber assembly 2 is positioned housed in the cylinder body 5, in the cylinder compartment 7.

**.** In an embodiment, the absorber assembly 2 is positioned interposed between the cylinder body 5 and the piston body 8.

**.** In particular, the absorber assembly 2 is positioned opposite the brake pedal or lever 4, or the push rod 11, with respect to the piston body 8.

**.** In particular, the absorber assembly 2 is positioned interposed between the cylinder body 5 and the distal end 10 of the piston body 8.

**.** In an embodiment, the absorber assembly 2 comprises a plurality of elastic elements 12 positioned in series and/or in parallel inside the cylinder body 5, in the cylinder compartment 7.

**.** According to an embodiment, the elastic elements 12 comprise helical compression springs positioned substantially coaxially with the axis of actuation 6 and/or disc springs and/or square springs and/or torsion springs and/or band springs and/or shaped springs.

**.** In an embodiment, the absorber assembly 2 comprises a spring guide 13 positioned inside the cylinder compartment 7, facing the piston body 8.

**.** Preferably, the spring guide 13 is positioned coaxially with the axis of actuation 6.

**.** The spring guide 13 is configured for guiding and controlling the deformation, in particular compression and extension, of the elastic elements 12 of the absorber assembly 2.

**.** In an embodiment, the spring guide 13 faces the distal end 10 of the piston body 8.

**.** In an embodiment, the spring guide 13 is interposed between at least two opposed elastic elements 12.

**.** In an embodiment, at least one elastic element 12, preferably a single elastic element 12, is interposed between the spring guide 13 and the distal end 10 of the piston body 8, while at least one other elastic element 12, preferably one or two elastic elements 12, is positioned opposite the first elastic element 12 with respect to the spring guide 13, in particular is positioned interposed between the spring guide 13 and the cylinder body 5.

**.** The end wall 300, and/or the stop surface 301, faces the distal end 10 of the piston body 8.

**.** In an embodiment, the braking feeling or request simulator device 1 is configured so that the end-of-stroke position of the piston body 8 corresponds to the position in which the piston body 8 abuts against the stop surface 301 of the end wall 300.

**.** In an embodiment, the braking feeling or request simulator device 1 is configured so that the end-of-stroke position of the piston body 8 corresponds to the position in which the spring guide 13, urged by the piston body 8, preferably abutting against the spring guide 13, abuts against the stop surface 301 of the end wall 300.

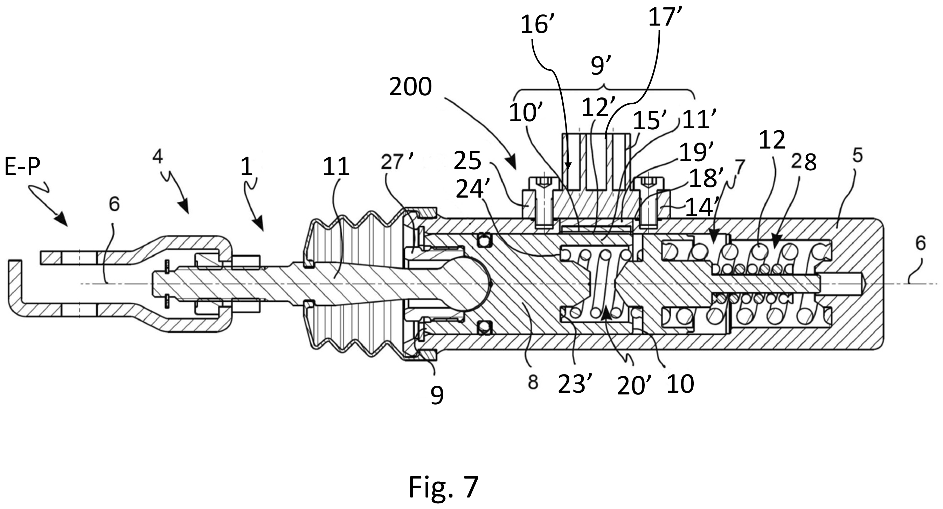

**.** The end wall 300 is made by a radial narrowing of the axial section of the cylinder compartment 7 (figure 7).

**.** In particular, the end wall 300 is formed by a step extending in the radially inner direction toward the axis of actuation 6, specifically more extended in the radially inner direction toward the axis of actuation 6 with respect to the remaining part of the cylinder body 5 along which the piston body 8 slides.

**.** In an embodiment, the cylinder body 5 comprises a sliding surface 14 and an absorber surface 15, which define the cylinder compartment 7.

**.** The sliding surface 14 and the absorber surface 15 both face the axis of actuation 6, preferably coaxial with the axis of actuation 6.

**.** The piston body 8 slides along the sliding surface 14 of the cylinder body 5.

**.** The piston body 8 does not slide along the absorber surface 15.

**.** Preferably, the absorber assembly 2 is at least partially preferably a portion of the housing compartment 7 defined axially and/or radially by the absorber surface 15.

**.** The sliding surface 14 and the absorber surface 15 are adjacent to each other.

**.** The sliding surface 14 and the absorber surface 15 are separated from each other by the end wall 300.

**.** Consequently, the absorber surface 15 has a cross-section transverse to the axis of actuation 6 smaller than the cross-section of the axis of actuation 6 of the sliding surface 15.

**.** In an embodiment, the absorber surface 15 has a smaller radial section than the radial section of the sliding surface 14. Therefore, the diameter of the radial section of the absorber surface 15 is smaller than the diameter of the radial section of the sliding surface 14.

**.** With reference now to the piston body 8, it is constrained to the cylinder body 5 by means of the anti-rotation pin 101.

**.** In this manner, the anti-rotation pin 101 prevents a relative rotation between the piston body 8 and the cylinder body 5 about the axis of actuation 6. In this manner, it is ensured that the detectable element 202 is constantly and regularly detectable by the first sensor 201.

**.** When the anti-rotation pin 101 is inserted in the pin receiving seat 102, the anti-rotation pin 101 also extends along the axis of reception 103, preferably the anti-rotation pin 101 is substantially coaxial with the axis of reception 103.

**.** In an embodiment, the axis of reception 103 extends along a radial direction to the axis of actuation 6.

**.** In an alternative embodiment, the axis of reception 103 extends in a plane orthogonal to the axis of actuation 6.

**.** Furthermore, the axis of reception 103 is extended along a direction that is, at the same time, neither radial nor parallel nor incident to the axis of actuation 6.

**.** In an embodiment, the second receiving seat 105 extends along a direction parallel to the axis of actuation 6.

**.** This allows a relative translation between piston body 8 and cylinder body 5 along the axis of actuation 6, and thus between piston body 8 and anti-rotation pin 101 integral with cylinder body 5.

**.** Advantageously, an anti-rotation system 100' configured in this manner effectively prevents a relative rotation between the piston body 8 and the cylinder body 5, by providing the pin receiving seat 102 jointly formed by the piston body 8 and the cylinder body 5, inside which the anti-rotation pin 101 is inserted.

**.** With a further advantage, an anti-rotation system 100' configured in this manner exhibits small overall footprint and requires a reduced quantity of material, because the axis of reception 103 along which the pin receiving seat 102 extends is not radial to the axis of actuation 6, but instead extends along a direction neither radial nor parallel to the axis of actuation 6.

**.** This makes it possible to extend the first receiving seat 104 along a direction incident, and not radial to, the cylinder body 5, which encounters a greater quantity of material of the cylinder body 5.

**.** Therefore, this configuration makes it possible to achieve a secure connection of the anti-rotation pin 101 to the pin receiving seat 102, in particular to the first receiving seat 104 defined by the cylinder body 5, without necessarily providing portions protruding or overhanging from the cylinder body nor oversizing of the desired thickness of the cylinder body 5.

**.** With a further advantage, the reduction or absence of protruding portions of the cylinder body 5 intended to form the first receiving seat 104 reduces the risk of collisions with the body (e.g., with the foot) of the drider of the straddle-type vehicle MC, and does not impair the aesthetic appearance of the braking feeling or request simulator device 1 to which the anti-rotation system 100' configured in this manner is applicable.

**.** In an embodiment, the second receiving seat 105 and the axis of actuation 6 are both comprised in a plane transverse to the sensor axis 203.

**.** In an embodiment, the second receiving seat 105 extends along a direction parallel to the axis of actuation 6 for a length less than the total length of the piston body 8 in the direction of the axis of actuation 6.

**.** In an embodiment, the second receiving seat 105 extends along a direction parallel to the axis of actuation 6 for a length comprised between 1/6 and 1/2, or between 1/5 and 1/3, of the total length of the piston body 8 along the axis of actuation 6.

**.** In an embodiment, the second receiving seat 105 extends inside the piston body 8.

**.** In an embodiment, the second receiving seat 105 is a blind seat, open in an outward direction relative to the piston body 8.

**.** In an embodiment, the second receiving seat 105 is defined by a recess or a pocket or a groove in the piston body 8.

**.** In an embodiment, the second receiving seat 105 is open at least in the radially outer direction relative to the axis of actuation 6.

**.** In an embodiment, the second receiving seat 105 is open at least in a direction parallel to the axis of reception 103 and in a direction transverse to both the axis of actuation 6 and the axis of reception 103.

**.** The piston body 8 defines a piston outer surface 16.

**.** The piston outer surface 16 comprises a cylindrical surface portion 17, having a substantially cylindrical or cylindrical-arc shape, coaxial with the axis of actuation 6.

**.** In an embodiment, the second receiving seat 105 is defined by a cut along an arc of the cylindrical surface portion 17. In particular, the cut extends in a direction parallel to the axis of actuation 6.

**.** In an embodiment, the anti-rotation pin 101 is an M4-type screw, or of a size similar to an M4-type screw, or an M6-type screw, or of a size similar to an M6-type screw.

**.** In an embodiment, the piston body 8 defines therein a housing cavity 18, open in an outward direction to the axis of actuation 6.

**.** In an embodiment, the housing cavity 18 is blind, alternatively it is through in a radial direction to the axis of actuation 6.

**.** The housing cavity 18 is adapted to house the detectable element 202 of the first sensor 201, in particular it is adapted to house a permanent magnet 204.

**.** In an embodiment, the housing cavity 18 is defined by a cut along an arc of the cylindrical surface portion 17, preferably extending in a direction parallel to the axis of actuation 6.

**.** In an embodiment, the detectable element 202, preferably the permanent magnet 204, is incorporated inside the radial footprint of the piston body 8.

**.** "Radial footprint" means the projection onto a plane transverse to the axis of actuation 6 of the greatest extension of a component in the radial direction to the axis of actuation 6.

**.** In an embodiment, the housing cavity 18 is at least partially defined by a cavity plane 19, extending substantially along a plane parallel to the axis of actuation 6 and transverse to the axis of reception 103.

**.** The cavity plane 19 extends between two opposite ends of the plane.

**.** Each plane end extends in a direction parallel to the axis of actuation 6.

**.** Advantageously, the accommodation of the detectable element 202, in particular of the permanent magnet 204 and of the anti-rotation pin 101 are obtained by means of respective stock-removal machining operations, which can be implemented easily and at low cost.

**.** In an embodiment, the detectable element 202, in particular the permanent magnet 204, and the housing cavity 18 are shaped so as to be couplable by means of a shape coupling.

**.** In an embodiment, the piston body 8 further comprises a female seat 20, e.g., defined by a blind hole or a through hole through the piston body 8 in a radial direction to the axis of actuation 6.

**.** The female seat 20 is defined inside the housing cavity 18.

**.** In particular, the female seat 20 extends along a direction orthogonal to the cavity plane 19.

**.** In an embodiment, the detectable element 202, preferably the permanent magnet 204, comprises a male body 32 at least partially insertable inside the female seat 20, and fixable integrally to the piston body 8 by means of a male-female coupling with the female seat 20.

**.** Advantageously, the female seat 20 is adapted to achieve a male-female coupling with the respective male body 32 of the detectable element 202, in particular the permanent magnet 204, wherein such male body 32 is at least partially insertable inside the female seat 20, and is, for example, fixable integral to the piston body 8 by means of a threaded element insertable into the female seat 20 in a direction opposite to the male body 32 and screwable to the male body.

**.** In an embodiment, the female seat 20 extends along a direction parallel to the axis of reception 103 and coplanar with the axis of reception 103 and with the axis of actuation 6.

**.** The cylinder body 5 defines an outer cylindrical surface 21.

**.** In an embodiment, the first receiving seat 104 is a through hole, extending along the axis of reception 103.

**.** In particular, the first receiving seat 104 is a through hole internally threaded by an internal thread 22.

**.** The cylinder body 5 further comprises an insertion hole 23 defined on the outer surface of the cylinder 21. The insertion hole 23 allows an insertion of the anti-rotation pin 101 from outside of the cylinder body 5 into the first receiving seat 104.

. The first receiving seat 104 configured in this manner thus extends from the insertion hole 23 to the cylinder compartment 7, and therefore allows an insertion of the anti-rotation pin 101 from the outside of the cylinder body 5 through the insertion hole 23, and a screwing of the anti-rotation pin 101 into the internal thread 22 of the first receiving seat 104.

. In this manner, the anti-rotation pin 101 is threaded into the first receiving seat 104 and leads inside the second receiving seat 105, preventing a relative rotation between piston body 8 and cylinder body 5.

. In an embodiment, the anti-rotation pin 101 is inside the radial footprint of the cylinder body 5.

. In an embodiment, the cylinder body 5 comprises a coupling seat 24.

. In particular, the coupling seat 24 is adapted to achieve a coupling with a sensor housing 25, which houses the first sensor 201.

. In an embodiment, the fastening screw 27 extends coaxially with respect to an axis incident to the cylinder compartment 7.

. In an embodiment, the at least one fastening screw 27 extends coaxially with respect to an axis substantially radial to the axis of actuation 6 and/or parallel to the sensor axis 203.

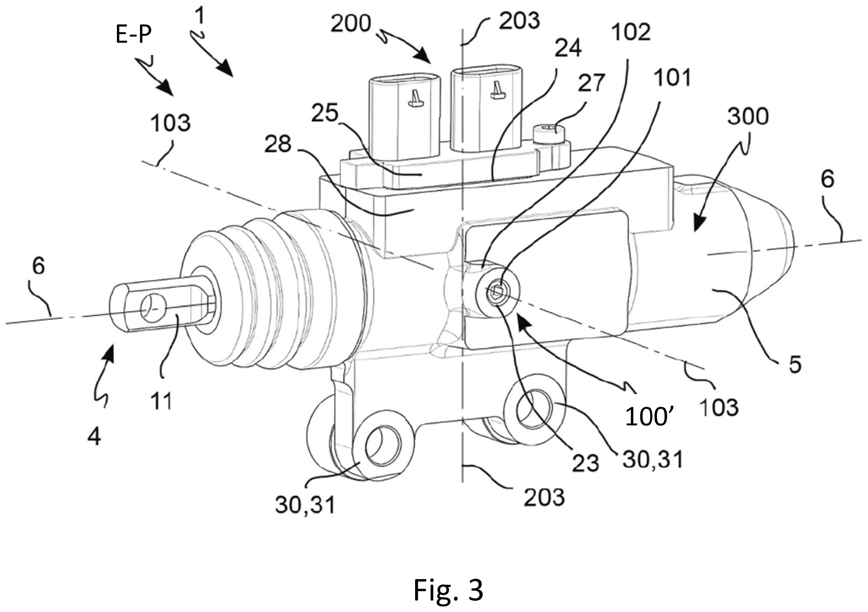

. In an embodiment, shown in figures 3-6, the coupling seat 24 is formed as a blind seat.

. In an embodiment, the cylinder body 5 comprises at least one containment wall 28 and a bottom wall 29, which delimit, at least partially, optionally totally, the coupling seat 24.

. In an embodiment, the bottom wall 29 extends substantially along a direction parallel to the axis of actuation 6 and to the axis of reception 103, and transverse to the sensor axis 203, while the at least one containment wall 28 extends in an overhanging direction from the cylinder body 5 in a direction opposite to the cylinder compartment 7.

. In assembled configuration, the sensor housing 25 is positioned superimposed on the bottom wall 29, in a transverse direction to the axis of actuation 6.

**.** According to an embodiment, the braking feeling or request simulator device 1 comprises at least one fastening portion 30, optionally two fastening portions 30.

**.** The at least one fastening portion 30 is configured to achieve a fastening of the braking feeling or request simulator device 1 to a frame of the straddle-type vehicle MC.

**.** In an embodiment, the at least one fastening portion 30 is formed by the cylinder body 5.

**.** In an embodiment, the at least one fastening portion 30 is a through fastening hole 31.

**.** In an embodiment, shown in figures 3-6, the at least one fastening portion 30 is positioned opposite the sensor system 200 or opposite the sensor housing seat 24 with respect to the axis of actuation 6.

**.** In an embodiment, shown in figures 3-6, the at least one fastening portion 30 is positioned, with reference to the axis of actuation 6, at an angular distance from the axis of reception 103 between 60° and 150°, or between 80° and 120°, preferably substantially 90°.

**.** In an embodiment, shown in figures 3-6, the at least one through fastening hole 31 extends coaxially with respect to an axis parallel to the axis of reception 103 and transverse to the sensor axis 203, preferably transverse to a plane in which the sensor axis 203 and the axis of actuation 6 are contained.

**.** According to an embodiment, the at least one electronic braking control unit UC is electrically connected to the sensor system 200 and, as mentioned previously, to said second actuator A2 of electro-hydraulic type.

**.** The at least one electronic braking control unit UC is configured to actuate said first actuator A1 of electro-hydraulic type and/or said second actuator A2 of electro-hydraulic type upon detection, by the first sensor 201, of a movement of the piston body 8 with respect to the cylinder body 5, in particular of a movement of the detectable element 202 with respect to the first sensor 201.

**.** With reference now to figure 7, in an embodiment, in combination with any of the preceding in which the braking feeling or request simulator device 1 is provided but alternative to those in which the sensor system 200 provides for the use of the permanent magnet 204 and a corresponding first sensor 201, the sensor system 200 further comprises a variable capacitor 9'.

**.** The variable capacitor 9' is a capacitive device, i.e., provided with electrical capacitance.

**.** The variable capacitor 9' is configured to detect the position and/or the translation of the piston body 8 with respect to the cylinder body 5.

**.** The variable capacitor 9' comprises a first plate 10', a second plate 11' and a dielectric 12'.

**.** The dielectric 12' is interposed between the first plate 10' and the second plate 11', spaced mutually apart.

**.** The first plate 10' and the second plate 11' are electrically connectable to voltage-generating means adapted to apply an electrical voltage between the first plate 10' and the second plate 11', so as to generate an electrical field in the dielectric 12'.

**.** Furthermore, the first plate 10' is positioned at the cylinder body 5.

**.** The second plate 11' is positioned at the piston body 8.

**.** Therefore, a relative translation between the first plate 10' and the second plate 11' along the axis of actuation 6, and therefore a relative translation between the piston body 8 and the cylinder body 5 along the axis of actuation 6, determines a variation in the electrical capacitance of the variable capacitor 9'.

**.** A sensor system 200 configured in this manner advantageously makes it possible to detect a movement or a determined positioning of the piston body 8 with respect to the cylinder body 5 by means of the variable capacitor 9'.

**.** Indeed, a translation or a change in the position of the piston body 8 with respect to the cylinder body 5, which can be actuated by an actuation of the brake pedal or lever 4 of the braking system 100, induces a variation of the electrical capacitance generable between the first plate 10' and second plate 11' of the variable capacitor 9', which may be read and processed by an electronic processing unit to detect and measure a relative translation between the piston body 8 and the cylinder body 5, and therefore an actuation of the braking system 100.

**.** With further advantage, the sensor system 200 configured in this manner avoids the use of a permanent magnet, resulting in a reduction of the overall costs and of the axial and radial footprint of the sensor system 200.

**.** With further advantage, a sensor system 200 configured in this manner can be assembly more easily and rapidly because it does not require the installation and fastening of a permanent magnet to the piston body.

**.** The sensor system 200 is configured so that a relative translation or a relative variation of positioning between the first plate 10' and the second plate 11' along the axis of actuation 6, and hence between the piston body 8 and the cylinder body 5 along the axis of actuation 6, determines a variation in the electrical capacitance of the variable capacitor 9'.

**.** In an embodiment, the first plate 10' is a conductive plate.

**.** In an embodiment, the first plate 10' has a planar shape.

**.** Alternatively, the first plate 10' has an arcuate shape, substantially coplanar with the cylinder body 5.

**.** In an embodiment, the first plate 10' is configured to be electrically connectable to an electrical power source external to the sensor system 200.

**.** In an embodiment, the sensor system 200 comprises a sensor housing 25.

**.** The first plate 10' is connected to or embedded in or co-molded with the sensor housing 25.

**.** In an embodiment, the sensor housing 25 comprises a coupling body 14' and a wiring body 15'.

**.** The coupling body 14' is configured to achieve a mechanical coupling between the sensor housing 25 and the cylinder body 5.

**.** The wiring body 15' is configured to allow an electrical connection between the first plate 10' and an electrical power source external to the sensor system 200.

**.** The wiring body 15' is connected to the coupling body 14', preferably is made in one piece or co-molded with the coupling body 14'.

**.** In an embodiment, the coupling body 14' is connected to the cylinder body 5 by means of at least one fastening screw, e.g., two opposite fastening screws.

**.** In an embodiment, the wiring body 15' overhangs from the coupling body 14', in a direction transverse to the coupling body 14'. In connected configuration, the wiring body 15' extends in a direction opposite to the cylinder body 5, with respect to the coupling body 14'.

**.** In an embodiment, the wiring body 15' forms therein a wiring compartment 16', open in a direction opposite the coupling body 14'.

**.** The sensor housing 25 further comprises an electrical interface 17' at least partially housed inside the wiring compartment 16'.

**.** In particular, the electrical interface 17' is configured to achieve an electrical connection between the first plate 10' and the electrical power source external to the sensor system 200, which may be, for example, electrical wiring connectable to the electrical interface 17'.

**.** In an embodiment, the first plate 10' is positioned opposite the wiring body 15' with respect to the coupling body 14'.

**.** Advantageously, in this manner, the first plate 10' is more exposed to the second plate 11', and the overall footprint of the sensor system 200 is reduced.

**.** In an embodiment, only the coupling body 14', or the entire sensor housing 25, is made of plastic material.

**.** In an embodiment, the first plate 10' is overmolded onto the coupling body 14' or onto the entire sensor housing 25.

**.** In an embodiment, the coupling body 14' is connected to the cylinder body 5 by means of a male-female connection, for a connection preferably in a radial direction to the axis of actuation 6.

**.** Specifically, the cylinder body 5 comprises a female seat 18', e.g., defined by a blind hole or a through-hole through the cylinder body 5 in the radial direction to the axis of actuation 6.

**.** Furthermore, the coupling body 14' comprises a male body 19', at least partially insertable in the female seat 18'.

**.** The male body 19' overhangs from the coupling body 14'. Furthermore, the male body 19' is positioned opposite, preferably coaxial, to the wiring body 15'.

**.** In an embodiment, the first plate 10' is connected or co-molded with the male body 19'.

**.** In this manner, in connected configuration, the first plate 10' is at least partially inserted in the cylinder body 5.

**.** In an embodiment, the first plate 10' is positioned, comprised inside the radial footprint of the cylinder body 5.

**.** "Radial footprint" means the projection onto a plane transverse to the axis of actuation 6 of the greatest extension of a component in the radial direction to the axis of actuation 6.

**.** In this manner the first plate 10' can advantageously positioned at a smaller distance from the piston body 8, and thus from the second plate 11', reducing the overall footprint of the variable capacitor 9' as well as facilitating mutual detection between the first plate 10' and the second plate 11'.

**.** In an embodiment, the sensor system 200 is configured so that the first plate 10' is always comprised inside the axial footprint of the piston body 8.

**.** "Axial footprint" means the projection of the greatest extension of a component along the axis of actuation 6.

**.** According to an embodiment, the male body 19' and the female seat 18' are shaped so as to form a "poka-yoke" element, to ensure a correct and error-free assembly.

**.** In an embodiment, the second plate 11' is formed by at least one portion of the piston body 8.

**.** Therefore, at least one portion of the piston body 8 constitutes the second plate 11'.

**.** Specifically, the second plate 11' is formed by at least one portion of the piston body 8 made of electrical conductor material

**.** This configuration advantageously reduces the overall footprint and the construction complexities of the sensor system 200, because no further component is required to be integrated into the piston body 8 to form the second plate 11', because the second plate 11' is made by the piston body 8 itself.

**.** In an embodiment, the second plate 11' is formed by at least one portion of the piston body 8 of axisymmetric shape with respect to the axis of actuation 6.

**.** This configuration advantageously simplifies the structure of the sensor system 200 and makes the functioning of the sensor system 200 more reliable, because it does not require the integration of an anti-rotation function of the piston body 8.

**.** Indeed, since the second plate 11' has an axisymmetric shape with respect to the axis of actuation 6, a possible rotation of the piston body 8 about the axis of actuation 6 does not cause any moving away or moving towards of the second plate 11' relative to the first plate 10', and thus does not affect the reading of the relative positioning between the second plate 11' and the first plate 10'.

**.** In an embodiment, the entire piston body 8 forms the second plate 11'.

**.** This configuration advantageously simplifies the structure of the sensor system 200 in that it provides to make the entire piston body 8 using a single, electrical conductor material.

**.** The piston body 8 extends between a proximal end 9 and a distal end 10.

**.** The brake pedal or lever 4 is connectable to the piston body 8 at the proximal end 9.

**.** The piston body 8 is movable inside the cylinder body 5, in particular by means of the brake pedal or lever 4, between a start-of-stroke position (as shown in figure 7) and an end-of-stroke position.

**.** In an embodiment, the piston body 8 defines therein a cavity 20' extending at least partially through the piston body 8, along the axis of actuation 6.

**.** The cavity 20' is shaped so that a translation of the piston body 8 with respect to the first plate 10' induces a variation of the electrical capacitance of the variable capacitor 9'.

**.** This configuration advantageously allows the easy detection of a translation of the piston body 8 with respect to the first plate 10', because the shaped cavity 20' defined in the piston body 8 makes the outline of the axial section of the piston body 8 along the axis of actuation 6 variable.

**.** Consequently, upon the translation of the piston body 8 with respect to the axis of actuation 6, the quantity or density of material of the piston body 8 will vary, which constitutes the second plate 11', positioned facing the first plate 10'. This variation in the quantity of electrically conductive material directly facing the first plate 10', which substantially results in a variation in the geometry of the second plate 11', generates a change in the electrical capacitance of the variable capacitor 9'.

**.** Specifically, if the entire piston body 8 constitutes the entire second plate 11', the electrical capacitance of the variable capacitor 9' is more influenced by the portion of the piston body 8 directly facing the first plate 10'.

**.** Consequently, upon the variation of the density of electrical conductor material of the piston body 8 directly facing the first plate 10', caused by the shaped cavity 20', a variation of the electrical capacitance of the variable capacitor 9' is generated.

**.** In an embodiment, the cavity 20' is open at the distal end 10 of the piston body 8.

**.** In an embodiment, the cavity 20' is blind.

**.** Consequently, the cavity 20' extends partially through the piston body 8, along the axis of actuation 6.

**.** According to this embodiment, the piston body 8 comprises a bottom wall 23', which at least partially defines the blind cavity 20'.

**.** The blind cavity 20' extends from the distal end 10 of the piston body 8 to a bottom end 24' of the cavity 20', wherein the bottom end 24' is defined by the bottom wall 23'.

**.** Specifically, the bottom end 24' corresponds to the point of greatest extension of the blind cavity 20' inside the piston body 8, in a direction parallel to the axis of actuation 6, with respect to the distal end 10 of the piston body 8.

**.** In an embodiment, the sensor system 200 is configured so that the translation of the piston body 8 between the start-of-stroke position and the end-of-stroke position causes a corresponding translation of the bottom end 24' along the axis of actuation 6 comprised at least partially, preferably totally, inside the axial footprint of the first plate 10', with reference to the axis of actuation 6.

**.** This configuration advantageously makes it possible to detect a translation or relative motion between the first plate 10' and the second plate 11' consisting of the piston body 8 with greater precision.

**.** Indeed, the bottom end 24' defines two adjacent portions of the piston body 8, wherein one portion has a solid section while the other - in which the cavity 20' is formed - has a partially hollow section.

**.** This difference advantageously makes it possible to achieve, at a translation of the piston body 8, a sharper and better-defined variation of the electrical capacitance of the variable capacitor 9', which is therefore more easily identifiable and processable by an electronic processing unit (e.g., the at least one electronic braking control unit UC) connectable to the variable capacitor 9'.

**.** In an embodiment, the cavity 20' is substantially axially symmetric with respect to the axis of actuation 6.

**.** In an embodiment, the cavity 20' is shaped so as to present, along the axis of actuation 6, a substantially constant area, toward the distal end 10.

**.** In an alternative embodiment, the cavity 20' is shaped so as to present, along the axis of actuation 6, an increasing area, preferably monotonic, in the direction of the distal end 10.

**.** This configuration advantageously allows a more effective detection of a determined positioning of the piston body 8 with respect to the cylinder body 5, because a determined measurement of the area of the cavity 20', i.e., a determined "quantity of material" of the piston body 8 in a cross section transverse to the axis of actuation 6, which may be associated and read to determine the position of the piston body 8 substantially corresponds to each relative positioning of the piston body 8 with respect to the cylinder body 5.

**.** In an embodiment, the cavity 20' defines a substantially cylindrical shape extending coaxially with the axis of actuation 6, wherein the bottom wall 23' forms a planar wall extending along a plane transverse to the axis of actuation 6.

**.** In an alternative embodiment, the second plat 11' is a component distinct from the piston body 8 and connected to the piston body 8.

**.** According to this embodiment, the second plate 11' is made of an electrically conductive material, while the piston body 8 is made of an electrically non-conductive or electrically insulating material.

**.** In an embodiment, the second plate 11' is fitted externally to the piston body 8.

**.** Furthermore, the second plate 11' has a substantially axisymmetric shape, e.g., annular.

**.** Advantageously, this configuration does not require the integration of an anti-rotation function of the piston body 8 since, given the axially symmetric shape of the second plate 11' fastened to the piston body 8, any rotation of the piston body 8 about the axis of actuation 6 does not cause any distancing or moving towards of the second plate 11' with respect to the first plate 10', and therefore does not compromise the reading of the mutual positioning between the second plate 11' and the first plate 10'.

**.** The piston body 8 is configured to be electrically connectable to an electrical power source external to the sensor system 200.

**.** In an embodiment, the piston body 8 is configured to receive electrical power at the proximal end 9.

**.** In an embodiment, the push rod 11 is made of an electrically conductive material.

**.** In an embodiment, the push rod 11 is configured to transfer electrical power to the piston body 8.

**.** Therefore, the piston body 8 receives electrical power from an electrical power source external to the sensor system 200 by means of the push rod 11.

**.** According to an embodiment, the retaining ring, indicated by reference numeral 27' in figure 7, is made of electrically conductive material.

**.** In an embodiment, the retaining ring 27' is configured to transfer electrical power to the piston body 8.

**.** Therefore, the piston body 8 receives electrical power from an electrical power source external to the sensor system 200 by means of the retaining ring 27' and/or the push rod 11.

**.** In an embodiment, the dielectric 12' is made of an air layer or air space or air gap. The air gap is present interposed between the cylinder body 5 and the piston body 8, and in particular between the first plate 10' and the second plate 11'.

**.** This configuration advantageously makes it possible to avoid the use of hydraulic fluid in the sensor system 200 or in the braking feeling or request simulator device 1 which integrates the sensor system 200.

**.** Specifically, in this manner the piston body 8, the first plate 10' and the second plate 11' are not immersed in brake fluid, with consequent reduction of costs and construction complexity.

**.** In an embodiment, the dielectric 12' consists of a plastic ring fitted externally onto the piston body 8, so as to be interposed between the first plate 10' and the second plate 11'.

**.** The plastic ring is integrally fastened to the cylinder body 5. Consequently, the piston body 8 is inserted in a sliding manner through the plastic ring.

**.** In an embodiment, the sensor system 200 comprises an electrical voltage generation module (not shown in figure 7) configured to apply an electrical voltage between the first plate 10' and the second plate 11'.

**.** In an embodiment, the sensor system 200 comprises an electronic processing unit (not shown in figure 7, e.g., the at least one electronic braking control unit UC), configured to detect a variation of the electrical capacitance of the variable capacitor 9', induced by a relative translation or by a variation of relative positioning between the piston body 8 and the cylinder body 5, preferably to process a braking request, and preferably to control the first actuator A1 of electro-hydraulic type and the second actuator A2 of electro-hydraulic type of the braking system 100 of the straddle-type vehicle MC.

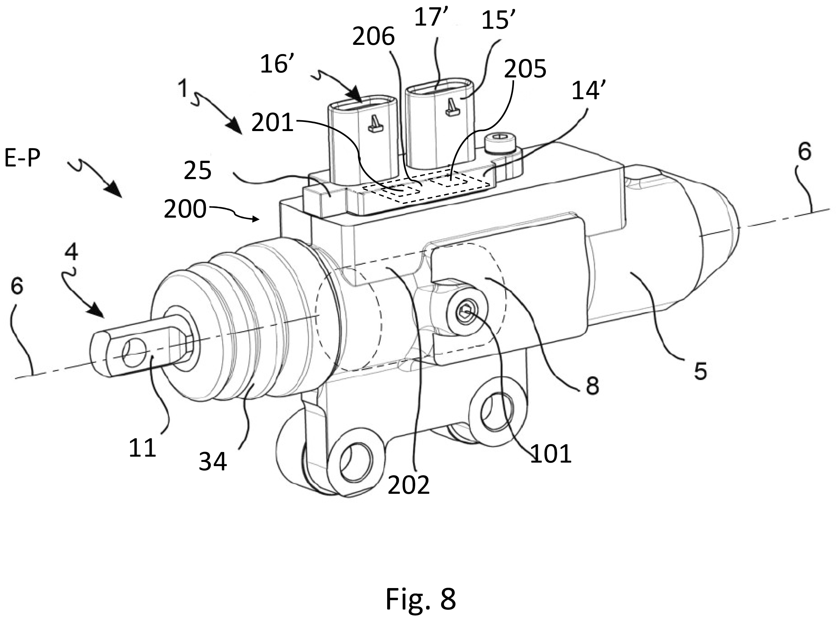

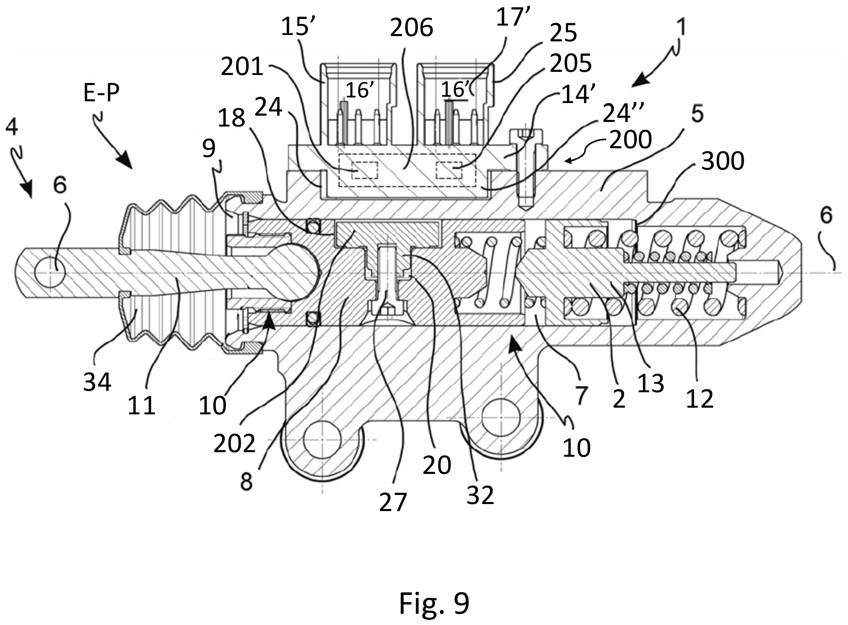

**.** According to an embodiment, in combination with any of the preceding ones and shown in the figures 8 and 9, the braking feeling or request simulator device 1 of the pedal group E-P of electrical type comprises, in addition to the first sensor 201 and the detectable element 202, a second pedal switching sensor 205, hereinafter also simply second sensor 205.

**.** The second pedal switching sensor 205 is, e.g., a micro-switch, unless otherwise specified, a position sensor, a force sensor.

**.** More in detail, the micro-switch is, for example, a mechanical-type switch, a Hall-effect switch or a Reed-type switch.

**.** The detectable element 202 is configured to generate a magnetic field.

**.** In an embodiment, the detectable element 202 is configured to generate a magnetic field of substantially constant intensity, with a reference system fixed to the detectable element 202.

**.** The second sensor 205 is adapted to activate at least one load of the straddle-type vehicle MC.

**.** "Load" also means "user", i.e., an electrical device capable of using electrical energy to convert it into another type of energy for a different use.

**.** Furthermore, the first sensor 201 is configured to detect the magnetic field generated by the detectable element 202.

**.** The detectable element 202 is positioned at the piston body 8.

**.** The first sensor 201 is positioned at the cylinder body 5.

**.** Furthermore, the second sensor 205 is adapted, preferably is configured, to activate and deactivate the at least one load of the straddle-type vehicle MC upon a detection, by the first sensor 201, of the magnetic field generated by the detectable element 202.

**.** The braking feeling or request simulator device 1 configured in this manner advantageously allows detecting a movement or a determined positioning of the piston body 8 with respect to the cylinder body 5 by means of a detection, by the first sensor 201, of the magnetic field generated by the sensitive element 202.

**.** Indeed, a translation or a variation of the position of the piston body 8 with respect to the cylinder body 5, which can be actuated by an actuation of the brake pedal or lever 4 of the braking system 100, induces a variation of the mutual positioning between the first sensor 201 and the detectable element 202, and thus a variation of the intensity of the magnetic field detected by the first sensor 201, which may be read and processed by an electronic processing unit (e.g., the at least one electronic braking control unit UC) to detect, and also measure, a relative translation between the piston body 8 and the cylinder body 5, and to actuate, by means of the second sensor 205, a load of the straddle-type vehicle MC, e.g., to activate the switching on of the brake lights, to provide a redundant signal for the braking request by the driver of the straddle-type vehicle MC, to activate the braking system when the straddle-type vehicle is switched off (so-called "wake-up" function).

**.** In greater detail, with reference to the "wake-up" function, with the straddle-type vehicle switched off, the driver may press with the foot on the second sensor 205 (micro-switch) to activate only the braking system, not the entire straddle-type vehicle. For example, this activation of only the braking system is useful when descending a ramp to go into a garage with the straddle-type vehicle, preventing the straddle-type vehicle to crash in the absence of brakes.

**.** Furthermore, the variation of the intensity of the magnetic field detected by the first sensor 201, induced by the translation or variation of the position of the piston body 8 with respect to cylinder body 5, and thus by the variation of the reciprocal positioning between first sensor 201 and detectable element 202, may also be read and processed by an electronic processing unit (e.g., the at least one electronic braking control unit UC) to detect, and also measure, a relative translation between piston body 8 and cylinder body 5, and to request the actuation of a corresponding braking force by the braking assembly on the wheels of the straddle-type vehicle MC.

**.** With further advantage, a braking feeling or request simulator device 1 configured in this manner does not require a second mechanically or electrically activatable sensor 205 because the activation of the load by the second sensor 205 is performed as a function of the magnetic field detected by the first sensor 201, e.g., as a function of the detection of a minimal variation of the magnetic field, which can be generated by a minimal variation of the relative positioning of the piston body 8 with respect to the cylinder body 5.

**.** Consequently, a braking feeling or request simulator device 1 configured in this manner does not display the mechanical tolerances of the prior art known to the inventors, but, on the contrary, reduces or substantially eliminates the idle stroke for the activation of the second sensor 205.

**.** Furthermore, a braking feeling or request simulator device 1 configured in this manner reduces or substantially eliminates the idle stroke for the activation of the braking assembly, controllable by a braking request signal by the first sensor 201.

**.** With further advantage, a braking feeling or request simulator device 1 configured in this manner has small overall footprint, overall weight, and low construction and assembly complexity, with respect to the prior art known to the inventors, because it does not require a dedicated mechanical or hydraulic system for activation of the second sensor 205.

**.** With a further advantage, a braking feeling or request simulator device 1 configured in this manner is possibly applicable not only for a pedal braking system configuration 100 but also for a lever braking system configuration, therefore applicable in particular to both braking actuators of a straddle-type vehicle.

**.** In an embodiment, the braking feeling or request simulator device 1 is configured so that the second sensor 205 is adapted, preferably is configured, to activate and deactivate the at least one load of the straddle-type vehicle MC upon a change in the intensity of the magnetic field generated by the detectable element 202 and detected by the first sensor 201.

**.** This detected variation in magnetic field intensity can be, in particular, caused by a different positioning or relative translation between piston body 8 and cylinder body 5.

**.** In an embodiment, the braking feeling or request simulator device 1 is configured so that the second sensor 205 is adapted, preferably is configured, to activate and deactivate the at least one vehicle load upon reaching a predetermined magnetic field intensity value generated by the detectable element 202 and detected by the first sensor 201.

**.** The braking feeling or request simulator device 1 is configured so that a relative translation of the piston body 8 with respect to the cylinder body 5 along the axis of actuation 6 determines a variation in the intensity of the magnetic field detected by the first sensor 201.

**.** The piston body 8 is movable inside the cylinder body 5, in particular by means of the brake pedal or lever 4, between a start-of-stroke position (as shown in figure 8) and an end-of-stroke position.

**.** In an embodiment, the braking feeling or request simulator device 1 is configured so that:
- when the piston body 8 is in the start-of-stroke position, the second sensor 205 does not activate the at least one vehicle load;
- when the piston body 8 is not in the start-of-stroke position, the second sensor 205 activates the at least one vehicle load.

**.** According to this embodiment, the second sensor 205 activates, and keeps activated, the at least one load of the vehicle when the piston body 8 is in any position different from the start-of-stroke position.

**.** According to an embodiment, the detectable element 202 is a permanent magnet.

**.** The detectable element 202, preferably the permanent magnet, is fastened integral with the piston body 8, e.g., by means of a threaded connection.

**.** In an embodiment, the detectable element 202, preferably the permanent magnet, is incorporated inside the piston body 8.

**.** The detectable element 202, preferably the permanent magnet, is housed in the housing seat 12.

**.** In an embodiment, the detectable element 202 is shaped substantially coplanar with the piston body 8.

**.** Consequently, the outer surface of the piston body 8 and of the detectable element 202 form a substantial structural continuity.

**.** In an embodiment, the detectable element 202 and the piston body 8 are shaped so as to achieve a geometric coupling.

**.** In an embodiment, the detectable element 202 and the piston body 8 are connectable to each other by means of a male-female connection, for a connection preferably in a radial direction to the axis of actuation 6.

**.** In an embodiment, the piston body 8 comprises a female seat 20, e.g., defined by a blind hole or a through hole through the piston body 8 in a radial direction to the axis of actuation 6.

**.** In an embodiment, the female seat 20 is defined inside the housing cavity 18 formed by the piston body 8.

**.** Furthermore, the detectable element 202, preferably the permanent magnet, comprises a male body 32, at least partially insertable in the female seat 20.

**.** The male body 32 overhangs from the detectable element 202.

**.** In an embodiment, the male body 32 is positioned opposite the second sensor 205.

**.** In an embodiment, the female seat 20 is a through hole and the male body 32 is inserted inside the female seat 20.

**.** Furthermore, the male body 32, and therefore the detectable element 202, is integrally fastened to the piston body 8 by means of a fastening screw 27 inserted in the female seat 20 in a direction opposite to the male body 32 and screwed to the male body 32.

**.** Advantageously, the fastening screw 27 is positioned substantially coaxial with the male body 32 along the same radial axis with respect to the axis of actuation 6.

**.** Preferably, the fastening screw 27 is comprised inside the radial footprint of the piston body 8.

**.** Advantageously, this connection ensures a secure connection between the detectable element 202 and the piston body 8, and at the same time reduces the overall footprint of the braking feeling or request simulator device 1.

**.** According to an embodiment, the detectable element 202, in particular the permanent magnet and/or the male body 32, and the piston body 8 and/or the housing seat 12 and/or the female seat 20, are shaped so as to achieve a poka-yoke element, to ensure a correct and error-free assembly.

**.** In an embodiment, the detectable element 202 is positioned connected to the piston body 8 so as to be radially directly facing the first sensor 201 and/or the second sensor 205.

**.** Advantageously, this configuration improves the detection of the magnetic field of the detectable element 202 by the first sensor 201, In this manner avoiding overdimensioning the detectable element 202, and at the same time reducing the overall footprint.

**.** In an embodiment, the piston body 8 is constrained to the cylinder body 5 by means of an anti-rotation pin 101.

**.** Advantageously, the anti-rotation pin 101 prevents the relative rotation between the piston body 8 and the cylinder body 5 about the axis of actuation 6 and ensures that the detectable element 202 is constantly and regularly detectable by the first sensor 201.

**.** In an embodiment, the anti-rotation pin 101 is positioned angularly spaced from the second sensor 205 and/or from the first sensor 201 and/or from the male body 32 of the detectable element 202, e.g., it is positioned at an angular distance of about 90°, with reference to the axis of actuation 6, from the second sensor 205 and/or from the first sensor 201 and/or from the axis along which the male body 32 is extended.

**.** In an embodiment, the detectable element 202 is contained inside the axial footprint of the piston body 8.

**.** "Axial footprint" means the projection of the greatest extension of a component along the axis of actuation 6.

**.** According to an embodiment, the piston body 8 is made of electrically non-conductive or electrically insulating material.

**.** Advantageously, this configuration is such that the piston body 8 does not interfere with the detection of the magnetic field generated by the detectable element 202 by the first sensor 201.

**.** In an embodiment, the detectable element 202 is an electromagnetic device configured to generate a magnetic field, preferably of constant intensity, when electrically supplied.

**.** For example, the detectable element 202 is a conductive plate or a coil.

**.** In an embodiment, the first sensor 201 is a position sensor configured to detect a relative movement and/or a determined relative positioning between the piston body 8 and the cylinder body 5.

**.** In an embodiment, the detectable element 202 is configured to activate a braking request signal, e.g., to an electronic processing unit (e.g., the at least one electronic braking control unit UC), upon the detection of a translation or movement or different relative position between the piston body 8 and the cylinder body 5.

**.** This braking request signal can be processed by the electronic control unit to command activation of a braking assembly of a straddle-type type vehicle associated with at least one wheel of the straddle-type type vehicle.

**.** In an embodiment, the first sensor 201 is a laser position sensor or an infrared position sensor or an elastomeric sensor or a piezoelectric sensor or a hall effect sensor or a magnetoresistive sensor or a linear magnetic sensor or a combination thereof.

**.** In an embodiment, the second sensor 205 is configured to activate a vehicle load.

**.** In an embodiment, the second sensor 205 is configured to activate or deactivate the vehicle brake lights.

**.** In an embodiment, the second sensor 205 is configured to activate a braking request signal, e.g., to an electronic processing unit (e.g., the at least one electronic braking control unit UC), upon detection of a translation or relative movement between the piston body 8 and the cylinder body 5.

**.** In an embodiment, the second sensor 205 is configured to activate a braking request signal, e.g., to an electronic processing unit (e.g., the at least one electronic braking control unit UC), upon the detection of a translation or relative movement between the piston body 8 and the cylinder body 5, under conditions in which a malfunction condition of the first sensor 201 is detected.

**.** Advantageously, this configuration increases the safety of the braking system 100 to which the pedal group E-P of electrical type comprising the braking feeling or request simulator device 1 can be applied because it has a redundant configuration for the braking request, which may be requested by means of the first sensor 201 and, in particular in the event of malfunction of the first sensor 201, also by the second sensor 205.

**.** In an embodiment, the braking feeling or request simulator device 1 comprises a printed circuit board 206 or PCB housed inside the sensor housing 25.

**.** In this embodiment, the first sensor 201 and the second sensor 205 are mounted on the printed circuit board 206 and electrically (galvanically) isolated with respect to one another.

**.** Therefore, the sensor housing 25 houses therein the printed circuit board 206, on which the first sensor 201 and the second sensor 205 are mounted and electrically isolated from one another, i.e., the sensitive parts of the sensor system 200.

**.** In an embodiment, the printed circuit board 206 is configured to receive in input, by means of the first sensor 201, a detection signal of a relative translation and/or of a determined relative positioning between the piston body 8 and the cylinder body 7.

**.** Furthermore, the printed circuit board 206 is configured to output, upon such detection of a relative translation and/or of a determined relative positioning between the piston body 8 and the cylinder body 7, a braking force request signal, by means of the first sensor 201, and a vehicle load activation signal, by means of the second sensor 205.

**.** For example, these signals can be received and processed by an electronic processing unit (e.g., the at least one electronic braking control unit UC).

**.** Advantageously, a braking feeling or request simulator device 1 configured in this manner makes it possible to integrate the second sensor 205 and the first sensor 201, while keeping them electrically isolated with respect to one another, on a single printed circuit board 206 which, by receiving a single input, i.e., the detection signal of the relative translation between the piston body 8 and the cylinder body 5, provides a plurality of outputs, i.e., a braking request and an activation of a load of the straddle-type vehicle.

**.** In an embodiment, the printed circuit board 206 is incorporated into or co-molded with the sensor housing 25.

**.** Advantageously, a braking feeling or request simulator device 1 configured in this manner makes it possible to integrate the second sensor 205 and the first sensor 201 inside a single sensor housing 25, e.g., applicable to the cylinder body 5, with small footprint and low complexity.

**.** According to an embodiment, the sensor housing 25 comprises a coupling body 14' and at least one wiring body 15'.

**.** The coupling body 14' is configured to achieve a mechanical coupling between the sensor housing 25 and the cylinder body 5.

**.** The at least one wiring body 15' is configured to allow an electrical connection between the printed circuit board 206 and an electrical power source external to the braking feeling or request simulator device 1.

**.** The at least one wiring body 15' is connected to the coupling body 14', preferably is made in one piece with the coupling body 14' or co-molded with the coupling body 14'.

**.** In an embodiment, the coupling body 14' is connected to the cylinder body 15' by means of at least one threaded screw and/or by means of a shape coupling.

**.** In an embodiment, the at least one wiring body 15' overhangs from the coupling body 14', in a transverse direction to the coupling body 15'.

**.** In connected configuration, the at least one wiring body 15' extends in a direction opposite to the cylinder body 5 with respect to the coupling body 14'.

**.** In an embodiment, the wiring body 15' forms therein a wiring compartment 16', open in a direction opposite to the coupling body 15'.

**.** The sensor housing 25 further comprises an electrical interface 17' at least partially housed inside the wiring compartment 16'.

**.** In particular, the electrical interface 17' is configured to establish an electrical connection between the printed circuit board 206 and the electrical power source external to the braking feeling or request simulator device 1, which may be, for example, an electrical wiring harness connectable to the electrical interface 17'.

**.** In an embodiment, the second sensor 205 and the first sensor 201, or, in general, the printed circuit board 206, are positioned opposite to the wiring body 15' with respect to the coupling body 14'.

**.** Advantageously, in this manner, the first sensor 201 is more exposed to the detectable element 202 and the overall footprints of the braking feeling or request simulator device 1 are reduced.

**.** In an embodiment, only the coupling body 14', or the entire sensor housing 25, is made of plastic material.

**.** In an embodiment, the printed circuit board 206 is overmolded onto the coupling body 14' or onto the entire sensor housing 25.

**.** According to an embodiment, the coupling body 14' is connected to the cylinder body 5 by means of a shape coupling, for a connection preferably in the radial direction to the axis of actuation 6.

**.** Specifically, the cylinder body 5 comprises a coupling seat 24, e.g., defined by a blind hole or a through-hole passing through the cylinder body 5 in the radial direction to the axis of actuation 6 and opening into the cylinder compartment 7.

**.** Furthermore, the coupling body 14' comprises a coupling portion 24" at least partially insertable into the coupling seat 24.

**.** The coupling portion 24" overhangs from the coupling body 14'.

**.** Furthermore, the coupling portion 24" is positioned opposite to the wiring body 15' with respect to the coupling body 14'.

**.** In an embodiment, the second sensor 205 and the first sensor 201, or, in general, the printed circuit board 206, are connected or co-molded with the coupling portion 24".

**.** In this manner, in connected configuration, the second sensor 205 and the first sensor 201, or in general the printed circuit board 206, are at least partially inserted in the cylinder body 5.

**.** In an embodiment, the second sensor 205 and the first sensor 201, or in general the printed circuit board 206, are positioned inside the radial footprint of the cylinder body 5.

**.** In this manner, the first sensor 201 is advantageously positionable at a smaller distance from the piston body 8, and thus from the detectable element 202, reducing the overall footprint of the braking feeling or request simulator device 1 as well as facilitating the detection of the magnetic field of the detectable element 202.

**.** In an embodiment, the braking feeling or request simulator device 1 is configured so that the first sensor 201 is always inside the axial footprint of the piston body 8.

**.** In an embodiment, the braking feeling or request simulator device 1 is configured so that the first sensor 201 is always contained inside the axial footprint of the detectable element 202.

**.** In an embodiment, the braking feeling or request simulator device 1 is configured so that the first sensor 201 and the second sensor 205 are always comprised inside the axial footprint of the piston body 8.

**.** In an embodiment, the braking feeling or request simulator device 1 is configured so that the printed circuit board 206 is always comprised inside the axial footprint of the piston body 8.

**.** In an embodiment, the braking feeling or request simulator device 1 is configured so that the detectable element 202 is always comprised inside the axial footprint of the sensor housing 25 or of the body inside the axial envelope of the housing body 14' or of the coupling portion 24".

**.** In an embodiment, the braking feeling or request simulator device 1 comprises an electronic processing unit (e.g., the at least one electronic braking control unit UC), configured to receive from the first sensor 201 the measurement of the magnetic field generated by the detectable element 202, or the measurement of a variation of the magnetic field generated by the detectable element 202 induced by a relative translation or by a variation of relative positioning between piston body 8 and cylinder body 5, preferably to activate the second sensor 205 and/or to process a braking request, and preferably to control the first actuator A1 of electro-hydraulic type and the second actuator A2 of electro-hydraulic type of the braking system 100 of the straddle-type vehicle MC.

**.** The piston body 8 extends between a proximal end 9 and a distal end 10.

**.** The brake pedal or lever 4 is connectable to the piston body 8 at the proximal end 9.

**.** In an embodiment, the braking feeling or request simulator device 1 comprises a dust boot 34, preferably elastomeric, preferably in the form of a bellows.

**.** The dust boot 34 surrounds the proximal end 9 of the piston body 8.

**.** In particular, the dust boot 34 is connected to the cylinder body at the push rod 11.

**.** In an embodiment, the braking system 100 comprises an electronic processing unit (e.g., the at least one electronic braking control unit UC).

**.** The electronic processing unit is electrically connected to the braking feeling or request simulator device 1 and to at least one brake caliper and to at least one load of the straddle-type vehicle MC.

**.** The electronic processing unit is configured to actuate the at least one brake caliper and the at least one load upon detection, by the braking feeling or request simulator device 1, of a movement of the piston body 8 with respect to the cylinder body 5, or upon a translation or variation of the relative position between the piston body 8 and the cylinder body 5.

**.** In particular, the movement of the piston body 8 with respect to the cylinder body 5 is detectable by the first sensor 201.

**.** In an embodiment, the brake request signaling and the activation of the at least one load are activatable by the printed circuit board 206, on which the first sensor 201 and the second sensor 205 are mounted.

**.** In an embodiment, shown in figures 8 and 9, the brake pedal or lever 4 is a pedal (figures 8 and 9) or a lever.

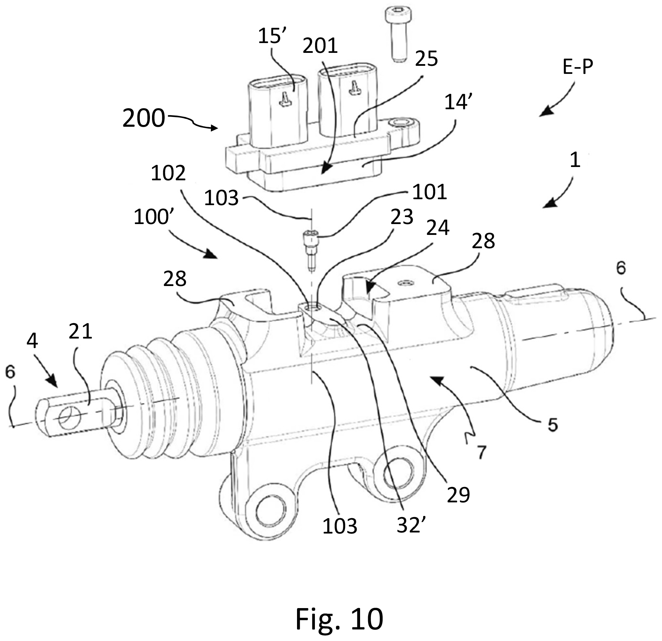

**.** According to an embodiment, in combination with any one of the preceding ones in which it is provided that, in the anti-rotation system 100', the accommodation axis 103 of the pin receiving seat 102 extends along a direction neither radial nor parallel nor incident to the axis of actuation 6, shown in figures 10, 11, and 12, the second receiving seat 105 of the pin receiving seat 102 is defined by a first striker wall 170 and by a second striker wall 180.

**.** The first striker wall 170 and the second striker wall 180 converge toward each other at an inner edge 190.

**.** The inner edge 190 extends along a direction parallel to the axis of actuation 6.

**.** Consequently, both the first striker wall 170 and the second striker wall 180 extend, in particular in a mutually divergent manner, from the inner edge 190 to the piston outer surface 16.

**.** In particular, at least one of either the first striker wall 170 or the second striker wall 180 extends from the inner edge 190 to the cylindrical surface portion 17.

**.** For example, the inner edge 190 is an inner corner or an inner chamfer or an inner fillet. The inner edge 190 is thus positioned radially closer to the axis of actuation 6 with respect to the cylindrical surface portion 17.

**.** According to an embodiment, the first striker wall 170 and the second striker wall 180 are orthogonal to each other.

**.** In this manner, the first striker wall 170 and the second striker wall 180 define a right angle between them at the inner edge 190.

**.** According to an embodiment, the first striker wall 170 extends along a plane parallel to the axis of actuation 6 and to the axis of reception 103.

**.** In an embodiment, the second striker wall 180 extends along a plane orthogonal to the axis of reception 103.

**.** Advantageously, the second receiving seat 105, configured, in this manner proves to be easy to manufacture at low cost, and effectively prevents a relative rotation between the piston body 8 and the cylinder body 5.

**.** The receiving seat 105 configured in this manner is, for example, easy to manufacture by means of a milling operation incident to the piston outer surface 16 in a direction parallel or transverse to the axis of reception 103 and carried out in the piston outer surface 16 along a direction parallel to the axis of actuation 6.

**.** With a further advantage, an anti-rotation system 100' configured in this manner has small overall footprint and requires a reduced quantity of material because the second receiving seat 105 extends along a direction substantially tangent to the piston body 8, which thus making it possible to form the first receiving seat 104 of the cylinder body 5 along a direction incident, and not radial, to the cylinder body 5 which encounters a greater quantity of material, e.g., usable to form adequate threading adapted to screw the anti-rotation pin 101 to the cylinder body 5.

**.** With further advantage, this configuration allows the use of an anti-rotation pin 101 of small size, or in any case less performing than the prior art known to the inventors, since the anti-rotation pin 101 is configured to prevent rotation of the piston body 8 with respect to the cylinder body 5 operating at least in compression.

**.** With reference to the figures 10, 11 and 12, this occurs in particular in preventing a possible counterclockwise rotation of the piston body 8 about the axis of actuation 6, which is prevented by the abutment between the second striker wall 180 and the anti-rotation pin 101, urged in compression.

**.** For example, also in this embodiment, the anti-rotation pin 101 is an M4-type screw, or of a size similar to an M4-type screw, while in the prior art known to the inventors at least an M6-type screw is required.

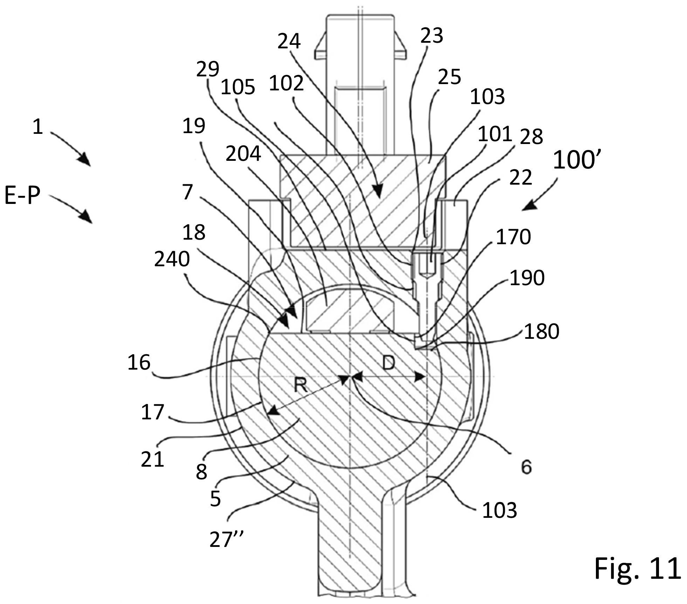

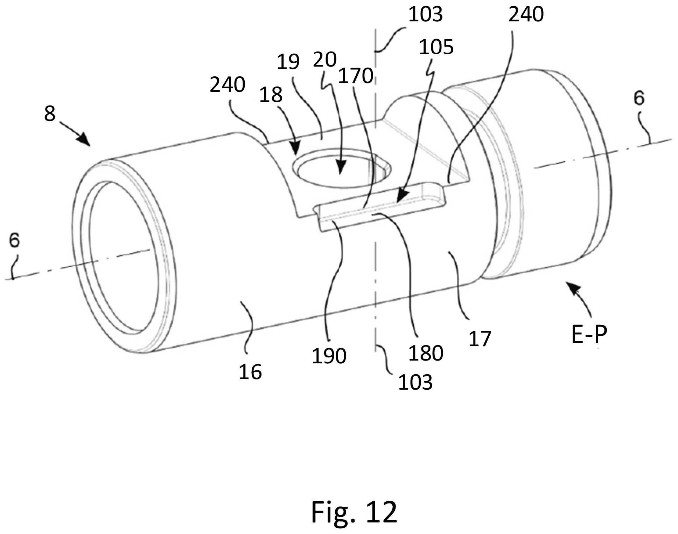

**.** In an embodiment, the second receiving seat 105 is defined by a cut formed at an end of plane 240 (figures 11 and 12).

**.** Advantageously, the configuration makes it possible to reduce the overall footprint of the anti-rotation system 100', by integrating, inside a small space, both the housing cavity 18 defined by the piston body 5 for housing the permanent magnet 204 or a different detectable element, and the receiving seat 105 for receiving the anti-rotation pin 101.

**.** Furthermore, in such configuration the radial footprint of the second receiving seat 105 and of the housing cavity 18 are at least partially overlapping or intersecting.

**.** Furthermore, the coupling between anti-rotation pin 101 and piston body 8 offset and parallel with respect to the coupling between permanent magnet 204 and piston body 8 avoids interference between the stroke of the permanent magnet 204 fastened to the piston body 8, and the anti-rotation pin 101 coupled in a sliding manner to the piston body 8.

**.** Furthermore, this offset and parallel coupling avoids the need to arrange the permanent magnet 204 and the anti-rotation pin 101 on axes which are mutually transverse or otherwise non-parallel, with a consequent increase in overall footprint.

**.** With reference to figure 11, it is worth noting that the cylindrical surface portion 17 defines a piston radius R.

**.** The piston radius R thus represents the distance between the cylindrical surface portion 17 and the axis of actuation 6.

**.** According to an embodiment, the axis of reception 103 is positioned at a distance D from the axis of actuation 6 comprised between:
- 0.5R and R, or
- 0.7R and 0.95R, or
- 0.8R and 0.9R, or
**.** wherein D is substantially equal to 0.85R.

**.** Therefore, the distance D represents the minimum distance between the axis of reception 103 and the axis of actuation 6 along a radial direction with respect to the axis of actuation 6.

**.** In an embodiment, the insertion hole 23 of the anti-rotation pin 101 is defined in the coupling seat 24 of the sensor body 5.

**.** In this manner, in an assembled configuration, the sensor housing 25 is positioned superimposed on the insertion hole 23, and therefore on the anti-rotation pin 101, along the axis of reception 103.

**.** In other words, the insertion hole 23, and therefore the anti-rotation pin 101, faces the sensor housing 25 in the direction of the axis of reception 103.

**.** Advantageously, this configuration makes it possible to reduce the overall footprint, since the radial footprint of the anti-rotation pin 101 and of the sensor housing 25 are superimposed, as well as covering the anti-rotation pin 101 by means of the sensor housing 25, thus making the anti-rotation pin 9 less exposed to atmospheric agents.

**.** In an embodiment, the bottom wall 29 of the cylinder body 5 extends substantially along a direction parallel to the axis of actuation 6, while the containing wall 28 extends in a transverse direction to the axis of actuation 6.

**.** In an embodiment, the bottom wall 29 is substantially coplanar or tangent to a portion 27" of the outer surface of cylinder 21.

**.** In assembled configuration, the sensor housing 25 is positioned superimposed on the bottom wall 29, in a transverse direction to the axis of actuation 6.

**.** In an embodiment, the insertion hole 23 is defined in the bottom wall 30.

**.** Advantageously, this configuration reduces the overall footprint of the anti-rotation system 100', since the first receiving seat 104 extends below the sensor housing 25.

**.** With a further advantage, since the pin receiving seat 102, and in particular the insertion hole 23, are covered by the sensor housing 25, the anti-rotation pin 101 is less exposed to atmospheric agents and can therefore be made of materials which do not require particular resistance to atmospheric agents.

**.** In an embodiment, the cylinder body 5 comprises two opposite containment walls 28, positioned along a direction parallel to the axis of actuation 6, which delimit the extension of the coupling seat 24 in a direction parallel to the axis of actuation 6.

**.** The bottom wall 29 extends between the two opposite containing walls 28.

**.** In an embodiment, shown in figure 12, the bottom wall 29 comprises a relief 32'.

**.** The relief 32' extends in a direction substantially transverse to the axis of actuation 6.

**.** In an embodiment, the insertion hole 23 is defined on the relief 32'.

**.** Advantageously, this configuration makes it possible to take the insertion hole 23 closer to the sensor housing 25, and thus cover the anti-rotation pin 101 more by means of the sensor housing 25.

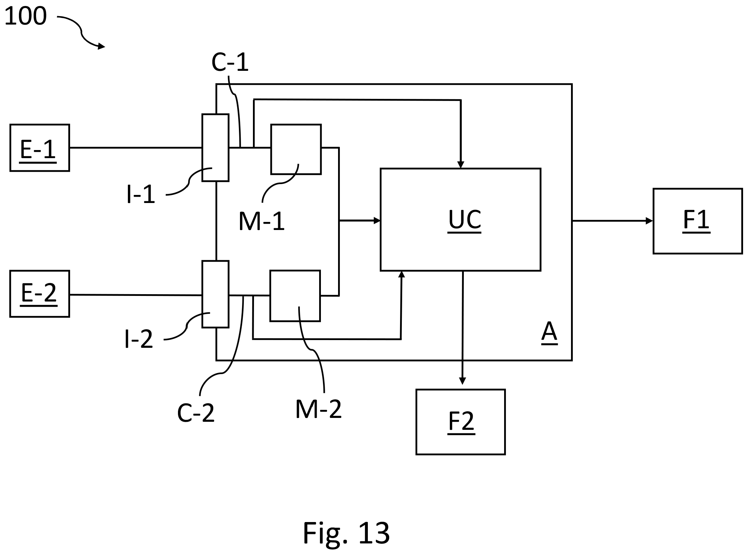

**.** According to an embodiment, in combination with any of the preceding ones, shown in figures 13-16, the braking system 100 comprises a brake control architecture A in which at least one electronic braking control unit UC is comprised.

**.** The braking control architecture A comprises at least one first electrical connection interface I-1 of said at least one electronic braking control unit UC to a first electrical power supply unit E-1, e.g., a battery, present in the straddle-type vehicle MC.

**.** The at least one first electrical connection interface I-1 is, for example, an electrical connector.

**.** The at least one electronic braking control unit UC is electrically connected to said at least one first electrical connection interface I-1 by means of a first electrical connection C-1, e.g., an electrical connection.

**.** The at least one electronic braking control unit UC is electrically connectable to a second electrical power supply unit E-2 present in the straddle-type vehicle MC by means of a second electrical connection C-2.

**.** According to this embodiment, the brake control architecture A further comprises a first electrical connection module M-1 operatively connected to the at least one electronic braking control unit UC.

**.** The first electrical connection module M-1 is arranged on the first electrical connection C-1 between the at least one electronic braking control unit UC and said at least one first electrical connection interface I-1.

**.** The brake control architecture A further comprises a second electrical connection module M-2 operatively connected to said at least one electronic braking control unit UC.

**.** The second electrical connection module M-2 is interposed on the second electrical connection C-2 between the at least one electronic braking control unit UC and the second electrical power supply unit E-2 present in the straddle-type vehicle MC.

**.** According to this embodiment, the first electrical connection module M-1 and the second electrical connection module M-2 are configured to allow the electrical power supply of said at least one electronic braking control unit UC, by means of the first electrical connection C-1 and/or the second electrical connection C-2, if at least either the first electrical power supply unit E-1, together with said at least one first electrical connection interface I-1, or the second electrical power supply unit E-2 is functioning and not in a fault state, to provide a correct level of electrical power supply to said at least one electronic braking control unit UC.

**.** "Functioning" means that the first electrical power supply unit E-1, together with said at least one first electrical connection interface I-1, or the second electrical power supply unit E-2, has a sufficient electrical charge level to electrically power the braking system in B-b-W technology.

**.** "Not in a fault state" means that the electrical connections of the first electrical power supply unit E-1, together with said at least one first electrical connection interface I-1, or of the second electrical power supply unit E-2, are according to the respective electrical diagram and are free of electrical faults e.g., such as short circuits to other electrical terminals or ground.

**.** The first electrical connection module M-1 and the second electrical connection module M-2 are devices configured to allow the passage of electric current (closing the respective electrical circuit) from the first electrical power supply unit E-1 to said at least one electronic braking control unit UC and from the second electrical power supply unit E-2 present in the straddle-type vehicle MC to said at least one electronic braking control unit UC when E-1 and E-2 indeed have a sufficient level of electric charge to electrically power the braking system 100 and no electrical faults are present, e.g., such as short circuits to other electrical terminals or ground.

**.** Therefore, the main function of this brake control architecture A is a sort of merge of two electrical power supply units of the at least one brake control unit present inside the braking system 100, in particular, always allowing them to function even when only one electrical power supply unit is available.

**.** According to an embodiment, the first electrical connection module M-1 is configured to allow the power supply of said at least one electronic braking control unit UC, by means of the first electrical connection C-1, if said first electrical power supply unit E-1 and said at least one first electrical connection interface I-1 are functioning and not in a fault state, as already defined above.

**.** According to an embodiment, the second electrical connection module M-2 is configured to allow the electrical power supply of the at least one electronic braking control unit UC, by means of the second electrical connection C-2, if said second electrical power supply unit E-2 present in the straddle-type vehicle MC is functioning and not in a fault state, as already defined above.

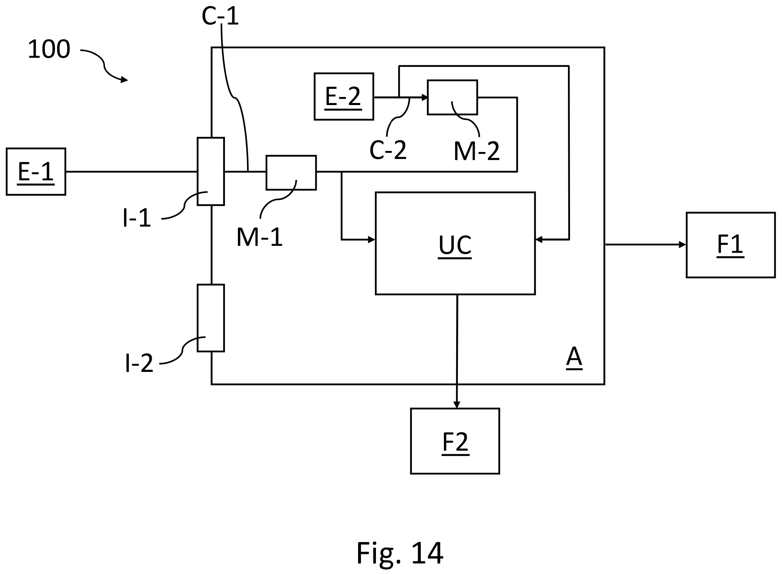

**.** According to an embodiment, shown in figure 14, the brake control architecture A comprises the second electrical power supply unit E-2 present in the straddle-type vehicle MC.

**.** In other words, in this embodiment, the second electrical power supply unit E-2 present in the straddle-type vehicle MC is internal to the braking control architecture A.

**.** According to an embodiment, in combination with the preceding one, the second electrical power supply unit E-2 comprises a battery or a capacitor.

**.** According to an embodiment, as an alternative to the preceding one in which the braking control architecture A comprises the second electrical power supply module M-2 present in the straddle-type vehicle MC, but in combination with all the others described, the braking control architecture A comprises a second electrical connection interface I-2, e.g., an electrical connector, of said at least one electronic braking control unit UC to the second electrical power supply unit E-2 present in the straddle-type vehicle MC.

**.** In other words, in this embodiment, shown in figure 13, the second electrical power supply unit E-2 present in the straddle-type type vehicle MC, e.g. a battery, is external to the brake control architecture A.

**.** In this embodiment, the at least one electronic braking control unit UC is electrically connected to said at least one second electrical connection interface I-2 by means of the second electrical connection C-2.

**.** The second electrical connection module M-2 is arranged on the second electrical connection C-2 between said at least one electronic braking control unit UC and said at least one second electrical connection interface I-2.

**.** According to an embodiment, in combination with the preceding one, the second electrical connection module M-2 is configured to allow the electrical power supply of said at least one electronic braking control unit UC, by means of the second electrical connection C-2, if said second electrical power supply unit E-2 present in the straddle-type vehicle MC and said at least one second electrical connection interface I-2 are functioning and not in a fault state, as defined above.

**.** According to further embodiments, in combination with any of the preceding ones, the first electrical connection module M-1 comprises a respective diode, having the anode terminal electrically connected to the at least one first electrical connection interface I-1 and the cathode terminal electrically connected to said at least one electronic braking control unit UC, or a respective integrated circuit specially programmed.

**.** In other words, the first electrical connection module M-1 may be a passive component, e.g., a diode, or an active component, i.e., a hardware or in software programmed integrated circuit to perform the electrical connection functions to which it is assigned.

**.** According to further embodiments, in combination with any of the preceding ones, the second electrical connection module M-2 comprises a respective diode, having the anode terminal electrically connected to said second electrical power supply unit E-2 and the cathode terminal electrically connected to said at least one electronic braking control unit UC, or a respective specifically programmed integrated circuit.

**.** In other words, also the second electrical connection module M-2 may be a passive component, e.g., a diode, or an active component, i.e., an integrated circuit programmed in hardware or in software to perform the electrical connection functions to which it is assigned.

**.** In the embodiment in which the first electrical connection module M-1 and the second electrical connection module M-2 comprise respective diodes, each diode is forward-biased and therefore closes the respective electrical circuit, so as to allow the flow of electrical current from the respective electrical power supply module.

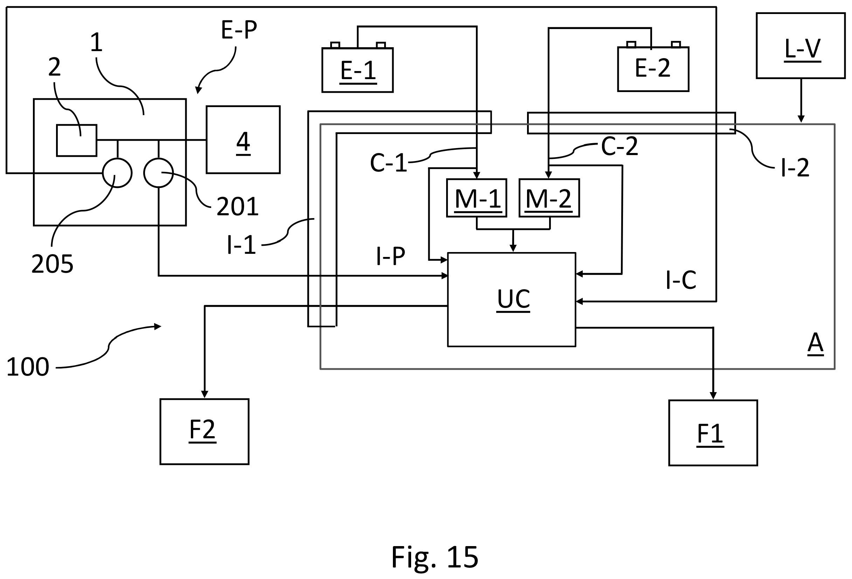

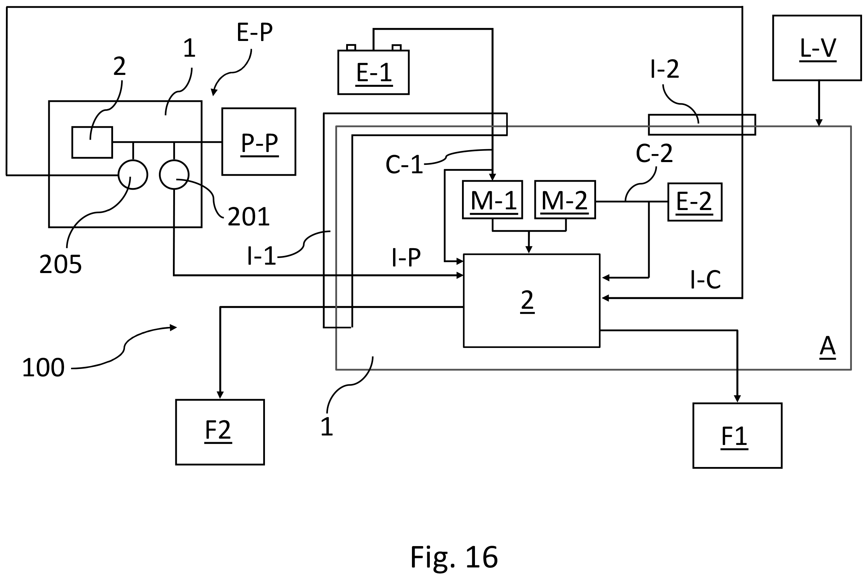

**.** According to an embodiment, in combination with any of the preceding ones in which, in the braking feeling or request simulator device 1, the first sensor 201 and the second pedal switching sensor 205, shown in figures 15 and 16, are present, the first sensor 201 is adapted to detect the position reached by the brake pedal or lever 4 following the actuation by the driver of the straddle-type vehicle MC between a first operating position (e.g., when the brake pedal or lever 4 is fully released by the vehicle driver) and a second operating configuration (e.g., when the brake pedal is fully pressed by the vehicle driver).

**.** Instead, the second brake pedal switching sensor 205 is adapted to signal the switching of the brake pedal or lever 4 from a first operating condition ON of braking request from brake pedal to a second operating condition OFF of no brake request from brake pedal and vice versa.

**.** According to this embodiment, the at least one electronic braking control unit UC is configured for:
- receiving a first information I-P representative of a position of the brake pedal or lever 4 of the pedal group E-P of electrical type of the vehicle straddle-type MC supplied based on a brake pedal position value detected by the first sensor 201 of the braking feeling or request simulator device 1;
- receiving a second information I-C representative of a change of the brake pedal 4 of the pedal group E-P of electrical type of the straddle-type vehicle MC from a first operating condition ON of braking request from brake pedal to a second operating condition OFF of no braking request from brake pedal and vice versa, supplied based on a brake pedal switching value detected by the second sensor 205 of the braking feeling or request simulator device 1;
- determining the presence or absence of an anomaly condition in said first sensor 201 of the braking feeling or demand simulator device 1 based on the first information I-P received representative of a position of the brake pedal or lever 4 of the pedal group E-P of electrical type of the straddle-type vehicle MC.

**.** "Anomaly condition" of the first sensor 201 of the braking feeling or request simulator device 1 means the absence of a signal originating from the sensor (therefore, the absence of the first information I-P) or the reception from the sensor of a corrupted signal (from which it is not possible to obtain that the first information I-P is reliable).

**.** The detection of this signal or the determination of the quality of this signal depends on the type of communication interface (analog or digital) of such a sensor.

**.** If there is no anomaly condition in said first sensor 201 of the braking feeling or request simulator device 1, the at least one electronic braking control unit UC is configured to determine a braking request from brake pedal or lever to implement a braking in B-b-W technology by means of the at least one second rear brake F2 of the straddle-type vehicle MC based on the received first information I-P representative of a position of the brake pedal 4 of the pedal group E-P of electrical type of the straddle-type vehicle MC.

**.** Indeed, there is a mathematical relationship between the brake pedal position measured by the first sensor 201 and the braking request (clamping force) from the brake pedal to be made to the brake calipers of a braking system in B-b-W technology.

**.** If, on the other hand, an anomaly condition is present in said first sensor 201 of the braking feeling or request simulator device 1, the at least one electronic braking control unit UC is configured to determine a braking request from brake pedal or lever to implement a braking in B-b-W technology by means of the at least one second rear brake F2 of the straddle-type vehicle MC based on the received second information I-C representative of a switching of the brake pedal or lever 4 of the pedal group E-P of electrical type of the straddle-type vehicle MC.

**.** In a further embodiment, in combination with the preceding one, if no anomaly condition is present in said first sensor 201 of the braking feeling or request simulator device 1, the at least one electronic braking control unit UC is configured to determine a braking request from brake pedal to distribute and implement a braking in B-b-W technology by means of the at least one first front brake F1 of the straddle-type vehicle and the at least one second rear brake F2 of the straddle-type vehicle MC based on the received first information I-P representative of a position of the brake pedal or lever 4 of the pedal group E-P of electrical type of the straddle-type vehicle MC.

**.** In this embodiment, if instead there is an anomaly condition is present in said first sensor 201 of the braking feeling simulator or request device 1, the at least one electronic braking control unit UC is configured to determine a braking request to distribute and actuate braking in B-b-W technology by means of the at least one first front brake F1 of the straddle-type vehicle and the at least one second rear brake F2 of the straddle-type vehicle MC based on the second information I-C received, representative of a switching of the brake pedal or lever 4 of the electric-type pedal group E-P of the straddle-type vehicle MC.

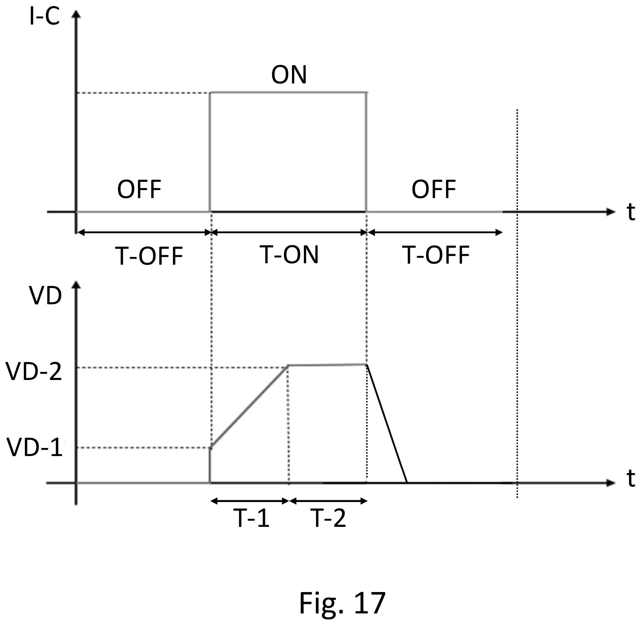

**.** According to an embodiment, in combination with the preceding one, with reference also to figure 17, if an anomaly condition is present in said first sensor 201 of the braking feeling or request simulator device 1, the at least one electronic braking control unit UC is configured to actuate braking in B-b-W technology based on the received second information I-C, representative of the switching of the brake pedal or lever 4 of the pedal group E-P of the electrical type of the straddle-type vehicle MC, generating a deceleration VD of the straddle-type vehicle having a time profile defined in this manner.

**.** From the switching of the brake pedal or lever 4 from the second operating condition OFF of no braking request from brake pedal to the first operating condition ON of braking request from brake pedal, inside a set overall time interval T-ON of duration of such first operating condition of brake pedal request:
- at the time instant in which the switching of the brake pedal or lever 4 from the second operating condition OFF of no braking request from brake pedal to the first operating condition ON of braking request from brake pedal occurs, said time profile has an instantaneous jump (step profile) from a null deceleration value to a first deceleration value VD-1 (e.g., between 0 g and 0.5 g; e.g., equal to 0.1 g);
- for a set first time interval T-1 (e.g., having a duration between 50 ms and 5 s; e.g., having a duration equal to 500 ms) comprised inside the set overall time interval T-ON of the first operating condition ON of brake pedal request, the time trend is increasing according to a set profile from the first deceleration value VD-1 to a second deceleration value VD-2, greater than the first deceleration value (e.g., between 0.2 g and 1 g; e.g., equal to 0.3); the set profile of the increasing temporal trend is, for example, a ramp profile or a polynomial-curve profile;
- for a second time interval T-2 comprises inside the set overall time interval T-ON of duration of the first operating condition ON of brake pedal request, the time trend is constant and equal to the reached second deceleration value VD-2. The second time interval T-2, whose duration is not definable beforehand, corresponds to the quantity of time in which the drider of the straddle-type vehicle MC requests braking (e.g., braking of a moving straddle-type vehicle may last some seconds but, with the straddle-type vehicle stationary, a drider may also remain stationary with the brake pedal pressed for minutes).

**.** At the instant of time in which the switching of the brake pedal or lever 4 from the first operating condition ON of braking request from brake pedal to the second operating condition OFF of no braking request from brake pedal occurs, said time trend is decreasing according to a set profile from the second deceleration value VD-2 to the null value; the set profile of the decreasing time trend is, for example, a ramp profile (as shown in figure 17) or more generally a polynomial curve profile.

**.** From the switching of the brake pedal P-P from the first operating condition ON of no braking request from brake pedal to the second operating condition OFF of braking request from brake pedal, inside a set overall time range T-OFF of duration of the second operating condition OFF of no braking request from brake pedal, said time trend is kept constant and equal to the null deceleration value for the whole set overall time range T-OFF of duration of such second operating condition OFF of no braking request from brake pedal.

**.** According to an embodiment, in combination with any of the preceding ones in which the at least one electronic braking control unit UC is configured for determining the presence or absence of an anomaly condition in said first sensor 201 of the braking feeling or request simulator device 1, the at least one electronic braking control unit UC is configured for determining the presence or absence of an anomaly condition in said second sensor 205 of the braking feeling or request simulator device 1, when a micro-switch, based on the receipt or non-receipt of a periodic signal that said second sensor 205 sends to the at least one electronic braking control unit UC for communicating that it is correctly active.

**.** If the at least one electronic braking control unit UC no longer receives said periodic signal, the at least one electronic braking control unit UC is configured to establish that the second sensor 205 is in an anomaly condition and to generate information representative of the presence of said anomaly condition in said second sensor 205 of the braking feeling or request simulator device 1.

**.** According to an embodiment, in combination with any of the preceding ones in which the at least one electronic braking control unit UC is configured to determine the presence or absence of an anomaly condition in said first sensor 201 of the braking feeling or request simulator device 1, the at least one braking control unit MC is configured to determine the presence or absence of an anomaly condition in said first sensor 201 of the braking feeling or request simulator device 1 by verifying the integrity of the first information I-P received representative of a position of the brake pedal 4 of the pedal group E-P of electrical type of the straddle-type vehicle MC.

**.** "Integrity" of a data item means that the data item, received by the at least one braking control unit MC, is consistent (equal) with that sent by the respective sensor.

**.** The mode for verifying this integrity depends on the type of communication interface between the at least one electronic braking control unit UC and the sensor.

**.** If the communication interface is of the digital type, the integrity may be verified, for example, by implementing cyclic redundancy check (CRC) mechanisms.

**.** If the communication interface is of the analog type, the integrity may be verified simply by verifying that the value of the data is inside a correct reference range (e.g., a reference range of 0.5 - 4.5 V for 0 - 5 V analog sensors).

**.** If the verification outcome is positive, the at least one electronic braking control unit UC is configured to generate information representative of the non-presence of said anomaly condition in said first sensor 201 of the braking feeling or request simulator device 1.

**.** If the verification outcome is negative, the at least one electronic braking control unit UC is configured to generate information representative of the presence of said anomaly condition in said first sensor 201 of the braking feeling or request simulator device 1.

**.** According to an embodiment, in combination with the preceding one, the at least one electronic braking control unit UC is configured to verify the integrity of the first received information representative of a position of the pedal P-P of the straddle-type vehicle MC by implementing a CRC cyclic redundancy check mechanism.

**.** According to an embodiment, in combination with any of the preceding ones in which it is provided that the at least one electronic braking control unit UC is configured to determine the presence or absence of an anomaly condition in said first sensor 201 of the braking feeling or request simulator device 1 and in combination with any of those in which the braking system 100 provides for the presence of the at least one second electrical connection interface I-2, the first sensor 201 of the braking feeling or request simulator device 1 is operatively connected to the at least one electronic braking control unit UC by means of said at least one first electrical connection interface I-1 and the second sensor 205 is operatively connected to the at least one electronic braking control unit UC by means of the at least one second electrical connection interface I-2, or vice versa.

**.** The fact of having the first sensor 201 of the braking feeling or request simulator device 1 operatively connected to at least one electronic braking control unit UC by means of two electrical connection interfaces, distinct and separate from each other, advantageously allows the braking system 100, according to this embodiment, to ensure braking continuity even if one of the two electrical connection interfaces is faulty or, more generally, not functioning.

**.** With reference again to figure 1, it is the object of the present invention a straddle-type vehicle MC comprising:
- at least one first front wheel W1;
- at least one second rear wheel W2;
- a braking system 100 operatively connected to said at least one first front wheel W1 and to said at least one second rear wheel W2.

**.** The braking system 100 is according to any of the embodiments described above.

**.** According to an embodiment, the straddle-type vehicle MC belongs to the group comprising two-wheeled vehicles (such as motorcycles, motorcycles, mopeds, scooters), three-wheeled vehicles (such as certain types of motorized tricycles or three-wheeled scooters) and also, albeit more rarely, four-wheeled vehicles (such as certain types of quads, although the classification may overlap with seat vehicles due to specific models) or, among the two-wheeled vehicles, also bicycles, both non-motorized and motorized, pedal-assist bicycles.

**.** It is worth noting that the object of the present invention is fully achieved.

**.** Indeed, the braking system in B-b-W technology for straddle-type vehicles object of the present invention is as simple as possible at the configuration level, yet at the same time reliable, high-performance, and such as to guarantee an adequate level of safety for the braking system, thus for the straddle-type vehicle.

**.** Furthermore, according to an embodiment of the braking system, the described braking feeling or request simulator arrangement has a dry configuration, i.e., in which a piston body and an absorber assembly are not immersed in a bath of hydraulic fluid, and effectively limits the stroke of the piston body sliding therein.

**.** Furthermore, according to a further embodiment of the braking system, the described braking feeling or request simulator device integrates a sensor system for detecting the translation of the piston body therein, in which a secure fastening of the sensor to the braking feeling or request simulator device is ensured, and an undesired rotation of the piston body with respect to the cylinder body of the braking feeling or request simulator device is prevented.

**.** In addition, according to a further embodiment of the braking system, the overall footprint and geometries of the braking feeling or request simulator device are such as to be adapted to be connected to a brake pedal of a straddle-type vehicle and can be manufactured by means of easy and low-cost mechanical machining.

**.** Furthermore, according to an embodiment of the braking system, the described position sensor system for a braking feeling or request simulator device has a small axial footprint and radial footprint, and low overall costs.

**.** Furthermore, according to an embodiment of the braking system, the position sensor system described for a braking feeling or request simulator device does not require a structure adapted to prevent the rotation of a float of the sensor system.

**.** In addition, according to an embodiment of the braking system, the position sensor system described for a braking feeling or request simulator device can be assembled more easily and rapidly.

**.** Furthermore, according to an embodiment of the braking system, the described braking feeling or request simulator device has a small overall footprint and has portions, e.g. integrating a micro-switch, less exposed to the external environment.

**.** In addition, according to an embodiment of the braking system according to an embodiment of the braking system, the described braking feeling or request simulator device advantageously integrates a micro-switch system which has a reduced or zero idle stroke.

**.** Furthermore, according to an embodiment of the braking system, the described braking feeling or request simulator device is even more easily and rapidly assembled and integrated with further components of a braking feeling or request simulator device.

**.** In an embodiment of the braking system, the described anti-rotation system, in particular for a braking feeling or request simulator device, has small overall footprint and requires a reduced quantity of material.

**.** Furthermore, according to an embodiment of the braking system, the anti-rotation system described, in particular for a braking feeling or request simulator device, reduces or avoids the presence of protruding or overhanging portions.

**.** Finally, according to an embodiment of the braking system, the described anti-rotation system, in particular for a braking feeling or request simulator device, effectively prevents a relative rotation between two moving parts and features low construction complexity and costs.

**.** In a further embodiment of the braking system, the described brake control architecture makes it possible to avoid arranging a hydraulic-type or mechanical-type braking to be used as backup on the rear brake of the straddle-type vehicle, in replacement of the braking, a braking in B-b-W technology, if an electrical fault or a malfunction of one or more electrical components of the architecture and/or of the braking system in B-b-W technology were to occur, thus being simple at the configuration level, yet at the same time reliable, high-performing, and such as to ensure an adequate level of safety for the braking system, and thus for the straddle-type vehicle.

**.** In greater detail, the described brake control architecture represents a so-called "fail operational" solution in the case of loss of the rear brake of a straddle-type vehicle without the aid of a hydraulic backup from a rear brake pedal.

**.** The main function is a sort of merge of two electrical power supply units of the brake control unit present inside the brake control architecture, in particular always allowing it to function even when only one electrical power supply unit is available.

**.** Indeed, the brake control architecture is configured to perform a merge function of two electrical power supply units of the brake control unit present inside the brake control architecture, i.e., to provide the downstream logic and power supply by means of an electrical connection to one or both power supplies, based on the availability status of the two supplies themselves.

**.** The availability status may be modified by fault conditions or by limited available charge of the two power supplies.

**.** The brake control architecture makes the braking system tolerant to single-fault cases of an electrical and/or electronic nature, in particular, it allows the braking system to continue performing braking in B-b-W technology from a braking request received from the brake pedal, without relying on a hydraulic backup.

**.** Indeed, by virtue of the presence of the redundant electrical power supply and of the merge function described above, the brake control unit continues to be electrically supplied, in this manner allowing braking to continue in response to a brake pedal request.

**.** Among other things, not having any hydraulic backup from the brake pedal, the braking system appears on the one side simpler at layout and configuration level, and on the other nevertheless remains robust to these electrical and/or electronic faults, taken individually.

**.** According to a further embodiment of the braking system, the braking control architecture advantageously makes it possible to control the deceleration of the straddle-type vehicle, and thus the braking, still in B-b-W technology, without relying on a hydraulic backup, by exploiting the switching of the brake pedal, usually employed to actuate the warning lights ("stop" lights) which signal the braking of the straddle-type vehicle, if the presence is detected of a fault in the sensor which detects the position of the brake pedal, the actuation of the brake pedal being the primary actuation to request the braking.

**.** Indeed, the brake control architecture uses the signal originating from the pedal switch, usually used for other, to continue monitoring the brake request from the pedal, and consequently to implement an ON-OFF type braking by virtue of this signal.

**.** To meet contingent needs, those skilled in the art may make changes and adaptations to the embodiments of the braking system described above or can replace elements with others, which are functionally equivalent, without departing from the scope of the following claims.

**.** Each of the features described above as belonging to a possible embodiment can be implemented irrespective of the other embodiments described.

## Claims

1. A braking system (100) in Brake-by-Wire technology for a straddle-type vehicle, comprising:
- at least one first front brake (F1) operatively associable with a first front wheel (W1) of a straddle-type vehicle (MC);
- a first actuator (A1) of electro-hydraulic type operationally connected to said at least one first front brake (F1);
- at least one second rear brake (F2) operatively associable with a second rear wheel (W2) of the straddle-type vehicle (MC);
- a second actuator (A2) of electro-hydraulic type operatively connected to said second rear brake (F2);
- a lever (L-V) of hydraulic type, located on the handlebars of the straddle-type vehicle (MC), adapted to send, at the command of a driver of the straddle-type vehicle (MC), a respective braking request to impart a respective braking action to the first front wheel (W1) of the straddle-type vehicle (MC) by means of said at least one first front brake (F1) and/or a respective braking action to the second rear wheel (W2) of the straddle-type vehicle (MC) by means of said second rear brake (F2);
- a pedal group (E-P) of electrical type adapted to send, at the command of the driver of the straddle-type vehicle (MC), a respective braking request to impart a respective braking action to the second rear wheel (W2) by means of said at least one second rear brake (F2) and/or a respective braking action to the first front wheel (W1) of the straddle-type vehicle (MC) by means of said at least one first front brake (F1);
- at least one electronic braking control unit (UC) operatively connected to said lever (L-V) of hydraulic type and electrically connected to said first actuator (A1) of electro-hydraulic type, to said second actuator (A2) of electro-hydraulic type and to said pedal group (E-P) of electrical type, said at least one electronic braking control unit (UC) being configured to control the braking of the first front wheel (W1) of said straddle-type vehicle (MC) and the braking of the second rear wheel (W2) of said straddle-type vehicle (MC) based on the braking request received from the driver of said straddle-type vehicle (MC) by means of said lever (L-V) of hydraulic type and the braking request received from the driver of said straddle-type vehicle (MC) by means of said pedal group (E-P) of electrical type.

2. The braking system (100) according to claim 1, further comprising a control sub-group (S1) operatively associated with the lever (L-V) of hydraulic type and electrically connected to the at least one electronic braking control unit (UC) and the first electro-hydraulic electrical actuator (A1),
when the braking system (100) is in a B-b-W operating mode, the control sub-group (S1) is configured to electrically detect a physical signal representative of the actuation of the lever (L-V) of hydraulic type by the driver of the straddle-type vehicle (MC) and to provide a corresponding electrical actuation signal of the lever (L-V) of hydraulic type to the at least one electronic braking control unit (UC), in this operating mode of the braking system (100), the at least one electronic braking control unit (UC) is configured to provide the first actuator (A1) of electro-hydraulic type with a respective electrical actuation signal based on the electrical control signal of the lever (L-V) of hydraulic type received from the control sub-group (S1),
when the braking system (100) is in the hydraulic backup mode, the control sub-group (S1) is configured to directly send to the first actuator (A1) of electro-hydraulic type a physical signal representative of the actuation of the lever (L-V) of hydraulic type by the driver of the straddle-type vehicle (MC), in this operating mode of the braking system (100), the first actuator (A1) of the electro-hydraulic type is configured to consider the physical signal representative of the actuation of the lever (L-V) of hydraulic type by the driver of the straddle-type vehicle (MC) as a respective actuation signal of hydraulic type.

3. The braking system (100) according to claim 2, wherein the control sub-group (S1) comprises a braking feeling or request simulation block (40) with lever of hydraulic type and a separation valve (41) of a braking feeling or request simulation circuit with lever of hydraulic type and a braking actuation circuit with lever of hydraulic type present in the braking system (100) and a discharge check valve (42) arranged in parallel to said separation valve (41), the transition from the B-b-W operating mode of the braking system (100) to the hydraulic backup mode being achieved by actuating the separation valve (41) present in the control sub-group (S1) by the at least one electronic braking control unit (UC),
the brake system (100) comprising a first hydraulic line (H1) configured to connect a master cylinder associated with said lever (L-V) of hydraulic type to said braking feeling or request simulation block (40) with lever of hydraulic type, and upstream of said separation valve (41) and said discharge check valve (42) of said control sub-group (S1),
when the brake system (100) is in an active B-b-W operating mode:
said separation valve (41) is configured, upon command of the at least one electronic brake control unit (UC), to close in order to prevent the passage of brake fluid from the master cylinder to the at least one brake caliper (C1) whose internal pressure is generated by the first electro-hydraulic electric actuator (A1);
in the event of actuation of the lever (L-V) of hydraulic-type, the brake fluid flows towards the braking feeling or request simulation block (40) with lever of hydraulic type and the pressure of the brake fluid pushes the discharge check valve (42) into a closed position;
in the event of release of the lever (L-V) of hydraulic-type, the braking feeling or request simulation block (40) with lever of hydraulic type pushes the brake fluid towards the master cylinder;
in the event that the brake fluid pressure generated by the first electro-hydraulic electric actuator (A1) is greater than the brake fluid pressure present in the first hydraulic line (H1), the discharge check valve (42) is configured to open to allow the discharge of brake fluid towards the master cylinder;
when the brake system (100) is in hydraulic backup mode:
the separation valve (41) is configured to open to allow a direct hydraulic connection of the lever (L-V) of hydraulic-type with the at least one brake caliper (C1);
the brake fluid pressure in the first hydraulic line (H1) is equal to the brake fluid pressure generated by the first electro-hydraulic electric actuator (A1), consequently, the discharge check valve (42) is closed;
in the event of actuation of the hydraulic-type lever (L-V), the brake fluid flows towards the first electro-hydraulic electric actuator (A1) and the at least one brake caliper (C1).

4. The braking system (100) according to claim 3, wherein the brake system (100) comprises a second hydraulic line (H2) configured to connect the master cylinder associated with said lever (L-V) of hydraulic-type downstream of said separation valve (41) and of said discharge check valve (42) of said control sub-group (S1), and to said at least one brake caliper (C1) via said first electro-hydraulic actuator (A1), the second hydraulic line (H2) comprising a refill check valve (43),
when the brake system (100) is in an active B-b-W operating mode, the refill check valve (43) on the second hydraulic line (H2) remains closed because the pressure in the branch of the at least one brake caliper (C1) is higher than the ambient pressure of the master cylinder;
in the absence of a brake request by the driver of the straddle-type vehicle (MC), the refill check valve (43) on the second hydraulic line (H2) can open in the event that the brake fluid pressure generated by the first electro-hydraulic actuator (A1) in the at least one brake caliper (C1) is lower than the ambient pressure.

5. The braking system (100) according to any one of the preceding claims, wherein the pedal group (E-P) of the electrical type comprises a braking feeling or request simulator device (1), the braking feeling or request simulator device (1) comprising:
- a cylinder body (5), extended along an axis of actuation (6), the cylinder body (5) forming a cylinder compartment (7) inside it;
- a piston body (8) housed in a sliding manner in the cylinder compartment (7);
the pedal group (E-P) of electrical type further comprising a brake pedal or lever (4) connected to the braking feeling or request simulator device (1) so that an actuation of the brake pedal or lever (4) corresponds to a translation of the piston body (8) in the cylinder body (5), along the axis of actuation (6);
the braking feeling or request simulator device (1) further comprising:
- an absorber assembly (2) configured to apply a reaction force on the brake pedal or lever (4) connected to the braking feeling or request simulator device (1), as opposed to an actuation of the brake pedal or lever (4);
- an anti-rotation system (100'), a sensor system (200) and an end wall (300), the anti-rotation system (100') comprising an anti-rotation pin (101) and a pin receiving seat (102), the pin receiving seat (102) extending along an axis of reception (103), and being shaped to receive the anti-rotation pin (101) in the direction of the axis of reception (103) to achieve a coupling with the anti-rotation pin (101), the pin receiving seat (102) being formed by a first receiving seat (104) and a second receiving seat (105) facing each other along the axis of reception (103), the first receiving seat (104) being defined by the cylinder body (5), while the second receiving seat (105) being defined by the piston body (8),
the sensor system (200) being configured to detect a translation and/or a relative position between the piston body (8) and the cylinder body (5), the sensor system (200) comprising a first sensor (201) and a detectable element (202), the first sensor (201) being configured to detect a translation and/or a position of the detectable element (202), the first sensor (201) being positioned at the cylinder body (5), and the detectable element (202) being positioned at the piston body (8), the first sensor (201) and the detectable element (202) being facing each other, in a radial direction to the axis of actuation (6), along a sensor axis (203),
the cylinder body (5) being shaped to form the end wall (300), the end wall (300) being extended in an overhanging direction from the cylinder body (5) in an internal direction to the cylinder compartment (7), the end wall (300) facing the piston body (8) and being configured to define the end position of the piston body (8), the end wall (300) extending about the axis of actuation (6), preferably coaxial to the axis of actuation (6), the end wall (300) defining a stop surface (301) extended in a plane transverse to the axis of actuation (6),
the sensor axis (203) being extended positioned, with reference to the axis of actuation (6), at an angular distance from the axis of reception (103) of between 60° and 150°.

6. The braking system (100) according to claim 5, wherein the at least one electronic braking control unit (UC) is electrically connected to the sensor system (200), the at least one electronic braking control unit (UC) being configured to actuate said first actuator (A1) of electro-hydraulic type and/or said second actuator (A2) of electro-hydraulic type upon the detection, by the first sensor (201), of a movement of the piston body (8) with respect to the cylinder body (5), in particular of a movement of the detectable element (202) with respect to the first sensor (201).

7. The braking system (100) according to any one of the preceding claims 5 or 6, wherein the sensor system (200) comprises a variable capacitor (9') configured to detect the position and/or translation of the piston body (8) relative to the cylinder body (5), the variable capacitor (9') comprising:
- a first plate (10');
- a second plate (11');
- a dielectric (12'), interposed between the first plate (10') and the second plate (11'),
the first plate (10') and the second plate (11') are electrically connectable to voltage-generating means adapted to apply an electrical voltage between the first plate (10') and the second plate (11'), so as to generate an electrical field in the dielectric (12'),
the first plate (10') being positioned at the cylinder body (5), the second plate (11') being positioned at the piston body (8).

8. The braking system (100) according to any one of the preceding claims 5 to 7, wherein the braking feeling or request simulator device (1) of the pedal group (E-P) of electrical type comprises a second pedal switching sensor (205) adapted to activate at least one load of the straddle-type vehicle (MC), the second sensor (205) being adapted to activate and deactivate, upon a detection, by the first sensor (201), of the magnetic field generated by the detectable element (202).

9. The braking system (100) according to claim 8, wherein the braking feeling or request simulator device (1) is configured so that the second sensor (205) is adapted to activate and deactivate the at least one load of the straddle-type vehicle (MC) upon a change in the magnetic field strength generated by the detectable element (202) and detected by the first sensor (201).

10. The braking system (100) according to any one of the preceding claims 5 to 9, wherein the braking feeling or request simulator device (1) comprises a printed circuit board (206), housed inside a sensor housing (25), the first sensor (201) and the second sensor (205) being mounted on the printed circuit board (206) and electrically isolated from each other.

11. The braking system (100) according to any one of the preceding claims 5 to 10, wherein the axis of reception (103) of the pin receiving seat (102) of the anti-rotation system (100') extends along a direction which is neither radial nor parallel nor indicative to the axis of actuation (6).

12. The braking system (100) according to claim 11, wherein the second receiving seat (105) of the pin receiving seat (102) is defined by a first striker wall (170) and a second striker wall (180), the first striker wall (170) and the second striker wall (180) are mutually converging in an inner edge (190) extended along a direction parallel to the axis of actuation (6), both the first striker wall (170) and the second striker wall (180) extending from the inner edge (190) to an outer piston surface (16).

13. The braking system (100) according to any one of the preceding claims 5 to 12, wherein the pedal group (E-P) comprises a brake pedal (4) operable by the driver of the straddle-type vehicle (MC) by means of a foot, the pedal group (E-P) of electrical type being installed on a frame portion of the straddle-type vehicle (MC) so that it is accessible by means of a foot by the driver of the straddle-type vehicle (MC), or
wherein the pedal group (E-P) of electrical type comprises a brake lever (4) operable by the driver of the straddle-type vehicle (MC) by hand, the pedal group (E-P) of electrical type being installed on a frame portion of the straddle-type vehicle (MC) so that the brake lever (4) is accessible by the hand of the driver of the straddle-type vehicle (MC).

14. The braking system (100) according to any one of the preceding claims, comprising a braking control architecture (A) comprising the at least one electronic braking control unit (UC),
the braking control architecture (A) comprising:
- at least one first electrical connection interface (I-1) of said at least one electronic braking control unit (UC) to a first electrical power supply unit (E-1) present in the straddle-type vehicle (MC), the at least one electronic braking control unit (UC) being electrically connected to said at least one first electrical connection interface (I-1) by means of a first electrical connection (C-1), the at least one electronic braking control unit (UC) being electrically connectable to a second electrical power supply unit (E-2) present in the straddle-type vehicle (MC) by means of a second electrical connection (C-2);
- a first electrical connection module (M-1) operatively connected to the at least one electronic braking control unit (UC), the first electrical connection module (M-1) being arranged on the first electrical connection (C-1) between the at least one electronic braking control unit (UC) and said at least one first electrical connection interface (I-1);
- a second electrical connection module (M-2) operatively connected to said at least one electronic braking control unit (UC), the second electrical connection module (M-2) being interposed on the second electrical connection (C-2) between the at least one electronic braking control unit (UC) and the second electrical power supply unit (E-2) present in the straddle-type vehicle (MC),
the first electrical connection module (M-1) and the second electrical connection module (M-2) being configured to allow the electrical supply of said at least one electronic braking control unit (UC), by means of the first electrical connection (C-1) and/or the second electrical connection (C-2), if at least one between said at least one first electrical power supply unit (E-1), together with said at least one first electrical connection interface (I-1), and said second electrical power supply unit (E-2) is functioning and not in a fault state to provide said at least one electronic braking control unit (UC) with a correct level of electrical power supply.

15. The braking system (100) according to claim 14, wherein the braking control architecture (A) comprises the second electrical power supply unit (E-2) present in the straddle-type vehicle (MC), or
wherein the braking control architecture (A) comprises a second electrical connection interface (I-2) of said at least one electronic braking control unit (UC) to the electrical power supply second unit (E-2) present in the straddle-type vehicle (MC), the electrical power supply second unit (E-2) present in the straddle-type vehicle (MC) being external to the braking control architecture (A).

16. The braking system (100) according to any one of the preceding claims 14 or 15, when dependent on claim 8, wherein the first sensor (201) is adapted to detect the position reached by the brake pedal or lever (4) following actuation by the driver of the straddle-type vehicle (MC) between a first operating position and a second operating position, the second brake pedal switching sensor (205) being capable of signaling the switching of the brake pedal or lever (4) from a first operating condition (ON) of braking request from brake pedal or lever to a second operating condition (OFF) of no braking request from brake pedal or lever and vice versa,
the at least one electronic braking control unit (UC) is configured to:
- receive first information (I-P) representative of a position of the brake pedal or lever (4) of the pedal group (E-P) of electrical type of the vehicle straddle-type (MC) supplied based on a brake pedal position value detected by the first sensor (201) of the braking feeling or request simulator device (1);
- receive second information (I-C) representative of a change of the brake pedal or lever (4) of the pedal group (E-P) of electrical type of the straddle-type vehicle (MC) from a first operating condition (ON) of braking request from brake pedal or lever to a second operating condition (OFF) of no braking request from brake pedal or lever and vice versa, supplied based on a brake pedal or lever switching value detected by the second sensor (205) of the braking feeling or request simulator device (1);
- determine the presence or absence of an anomaly condition in said first sensor (201) of the braking feeling or demand simulator device (1) based on the first information (I-P) received representative of a position of the brake pedal or lever (4) of the pedal group (E-P) of electrical type of the straddle-type vehicle (MC),
if there is no anomaly condition in said first sensor (201) of the braking feeling or request simulator device (1), the at least one electronic braking control unit (UC) is configured to determine a braking request from brake pedal or lever to implement a braking in B-b-W technology by means of the at least one second rear brake (F2) of the straddle-type vehicle (MC) based on the received first information (I-P) representative of a position of the brake pedal or lever (4) of the pedal group (E-P) of electrical type of the straddle-type vehicle (MC),
if, on the other hand, an anomaly condition is present in said first sensor (201) of the braking feeling or request simulator device (1), the at least one electronic braking control unit (UC) is configured to determine a braking request from brake pedal or lever to implement a braking in B-b-W technology by means of the at least one second rear brake (F2) of the straddle-type vehicle (MC) based on the received second information (I-C) representative of a switching of the brake pedal or lever (4) of the pedal group (E-P) of electrical type of the straddle-type vehicle (MC), if no anomaly condition is present in said first sensor (201) of the braking feeling or request simulator device (1), the at least one electronic braking control unit (UC) is configured to determine a braking request from brake pedal or lever to distribute and implement a braking in B-b-W technology by means of the at least one first front brake (F1) of the straddle-type vehicle (MC) and the at least one second rear brake (F2) of the straddle-type vehicle (MC) based on the received first information (I-P) representative of a position of the brake pedal or lever (4) of the pedal group (E-P) of electrical type of the straddle-type vehicle (MC),
if an anomaly condition is present in said first sensor (201) of the braking feeling or request simulator device (1), the at least one electronic braking control unit (UC) is configured to determine a braking request to restart and implement a braking in B-b-W technology by means of the at least one first front brake (F1) of the straddle-type vehicle (MC) and the at least one second rear brake (F2) of the straddle-type vehicle (MC) based on the received second information (I-C) representative of a switching of the pedal or brake lever (4) of the pedal group (E-P) of electrical type of the straddle-type vehicle (MC).

17. A straddle-type vehicle (MC) comprising:
- at least one first front wheel (W1);
- at least one second rear wheel (W2);
- a braking system (100) operatively connected to said at least one first front wheel (W1) and said at least one second rear wheel (W2),
the braking system (100) being in accordance with any of the preceding claims.
